# EUROPÄISCHE PATENTSCHRIFT

(11) **EP 4 083 124 B1**
(45) Veröffentlichungstag und Bekanntmachung des Hinweises auf die Patenterteilung: **19.03.2025**
(21) Anmeldenummer: 21171657.6
(22) Anmeldetag: 30.04.2021
(51) Int. Cl.: C08J 9/12, C08J 9/18, C08J 9/228, B29C 44/34, B29C 35/08

(54) **VERFAHREN ZUR HERSTELLUNG ZELLULÄRER POLYOLEFIN-BASIERTER KUNSTSTOFFPARTIKEL**
METHOD FOR PRODUCING CELLULAR POLYOLEFIN-BASED PLASTIC PARTICLES
PROCÉDÉ DE FABRICATION DE PARTICULES DE MATIÈRE PLASTIQUE À BASE DE POLYOLÉFINES CELLULAIRES

(43) Veröffentlichungstag der Anmeldung: 02.11.2022
(73) Patentinhaber: JSP International SARL, 60190 Estrées-Saint-Denis (FR)
(72) Erfinder: DZIKOWSKI, Pascal, 60190 Estrées-Saint-Denis (FR); JANOUSEK, Jan, 60190 Estrées-Saint-Denis (FR)
(74) Vertreter: Hafner & Kohl PartmbB

(56) Entgegenhaltungen:
- US-A1- 2005 059 747
- US-A1- 2010 240 854

## Beschreibung

Die Erfindung betrifft ein Verfahren zur Herstellung zellulärer Polyolefin-basierter Kunststoffpartikel.

Verfahren zur Herstellung zellulärer Polyolefin-basierter Kunststoffpartikel, welche, insbesondere zur Herstellung von Partikelschaumformteilen weiterverarbeitet werden, sind aus dem Stand der Technik dem Grunde nach bekannt.

Bekannte Verfahren zur Herstellung zellulärer Polyolefin-basierter Kunststoffpartikel basieren auf einem zweistufigen Prozess, welcher in einer ersten Stufe ein Aufschmelzen eines thermoplastischen Polyolefin-basierten Kunststoffmaterials in einem Extruder sowie ein Beladen der so innerhalb des Extruders erzeugten thermoplastischen Polyolefin-basierten Kunststoffmaterialschmelze mit einem Treibmittel und in einer zweiten Stufe ein Granulieren bzw. Zerkleinern des strangförmig aus dem Extruder austretenden und treibmittelbedingt expandierenden bzw. expandierten thermoplastischen Polyolefin-basierten Kunststoffmaterials vorsieht.

In der ersten Stufe eines entsprechenden Verfahrens wird das Treibmittel aufgrund der in dem Extruder herrschenden Druck- und Temperaturverhältnisse in der thermoplastischen Kunststoffmaterialschmelze gelöst. Nach Austritt des mit Treibmittel beladenen thermoplastischen Polyolefin-basierten Kunststoffmaterials aus dem Extruder erfolgt, bedingt durch den Druckabfall, ein Expandieren des Polyolefin-basierten Kunststoffmaterials infolge einer Überführung des Treibmittels in die Gasphase.

Durch die in der zweiten Stufe eines entsprechenden Verfahrens, z. B. vermittels einer Schneideinrichtung, erfolgende Granulierung bzw. Zerkleinerung des strangförmig aus dem Extruder austretenden und, wie beschrieben, nach Austritt aus dem Extruder treibmittelbedingt sogleich expandierenden Polyolefin-basierten Kunststoffmaterials entstehen zelluläre Polyolefin-basierte Kunststoffpartikel, welche sich in einem separaten Verarbeitungsprozess zu einem Partikelschaumformteil weiterverarbeiten lassen.

Bekannte Verfahren sind zunächst in anlagen- als auch prozesstechnischer Hinsicht vergleichsweise komplex ausgestaltet. Zudem sind die mit bekannten Verfahren herstellbaren zellulären Polyolefin-basierten Kunststoffpartikel im Hinblick auf Eigenschaften, wie z. B. Größe, Morphologie und Verteilung der Zellen, verbesserungswürdig; die Möglichkeiten, auf entsprechende Eigenschaften der zellulären Polyolefin-basierten Kunststoffpartikel anlagen- bzw. prozesstechnisch Einfluss zu nehmen, sind bei bekannten Verfahren deutlich begrenzt.

Weiterhin ist es mit bekannten Verfahren nicht möglich, zelluläre Polyolefin-basierte Kunststoffpartikel ausgehend von einem vorexpandierten Polyolefin-basierten Kunststoffmaterial herzustellen. Dies gilt insbesondere deshalb, als der beschriebene extrusionsbasierte Prozess die Struktur der vorexpandierten Polyolefin-basierten Kunststoffmaterialpartikel, insbesondere aufgrund des mechanischen wie auch des thermischen Energieeintrags, schädigt bzw. zerstört.

Dies gilt insbesondere für dem Grunde nach bekannte Autoklav-Prozesse, in welchem vorexpandiertes Polyolefin-basiertes Kunststoffmaterialpartikel in einer Autoklaveinrichtung (sog. Nach-/Weiterschäumer) unter Einsatz von Heißdampf batchweise und somit diskontinuierlich zu Schaumperlen expandiert wird. Verbesserungswürdig hieran sind u.a. die Energieineffizienz, die infrastrukturellen Voraussetzungen für die Dampferzeugung bzw. -versorgung, das Risiko einer Verschlechterung der Morphologie der hergestellten Schaumperlen über ihr gesamtes Volumen, eine hohe Streuung durch unterschiedliche thermische Verhältnisse in den verschiedenen Bereichen der Autoklaveinrichtung) sowie erforderliche nachfolgende Trocknungsprozesse um die Feuchtigkeit des Heißdampfs wieder zu entfernen.

US 2010/024085 A1 offenbart ein Verfahren zur Herstellung vorexpandierter Polypropylen-Partikel.

US 2005/0059747 A1 offenbart ein Verfahren zur Verarbeitung expandierbarer Polymerpartikel.

Hiervon ausgehend liegt der vorliegenden Erfindung die Aufgabe zugrunde, ein demgegenüber verbessertes Verfahren zur Herstellung zellulärer Polyolefin-basierter Kunststoffpartikel anzugeben, welches auch ausgehend von vorexpandierten Polyolefin-basierten Kunststoffmaterialpartikeln die Herstellung von zellulären Polyolefin-basierten Kunststoffpartikeln, insbesondere mit gezielt einstellbaren Eigenschaften für die nachfolgende Verarbeitung zu Partikelschaumformteilen und deren Einsatz- bzw. Gebrauchseigenschaften, ermöglicht.

Die Aufgabe wird durch ein Verfahren gemäß Anspruch 1 gelöst. Die hierzu abhängigen Ansprüche betreffen mögliche Ausführungsformen des Verfahrens.

Ein erster Aspekt der Erfindung betrifft ein Verfahren zur Herstellung zellulärer Polyolefin-basierter Kunststoffpartikel; das hierin beschriebene Verfahren dient sonach zur im Allgemeinen zur Herstellung zellulärer Polyolefin-basierter Kunststoffpartikel. Bei den verfahrensgemäß herstellbaren bzw. hergestellten Polyolefin-basierten Kunststoffpartikeln handelt es sich sonach um Polyolefin-basierte Kunststoffpartikel, welche zumindest abschnittsweise, typischerweise vollständig, eine zelluläre Struktur aufweisen. Die zellulären Polyolefin-basierten Kunststoffpartikel können zudem, insbesondere aufgrund eines bestimmten Gehalts an Treibmittel - sei es ein Rest aus dem beschriebenen Verfahren oder ein nachträglich in einem separaten Prozessschritt eingebracht -, ein gewisses (weiteres) Expansionsvermögen aufweisen. Die verfahrensgemäß herstellbaren bzw. hergestellten zellulären Polyolefin-basierten Kunststoffpartikel können sonach expandierbar und/oder aufgrund ihrer zellulären Struktur (mechanisch) komprimierbar bzw. kompressibel sein. Die verfahrensgemäß herstellbaren bzw. hergestellten zellulären Polyolefin-basierten Kunststoffpartikel können in allen Fällen als "Schaumpartikel" (foam particle) oder "Schaumperlen" (foamed beads) bezeichnet bzw. erachtet werden. Wie sich im Weiteren ergibt, kann das Verfahren auch als Verfahren zur strahlungsbasierten Modifikation, d. h. insbesondere zur Nach- bzw. Weiterexpansion, vorexpandierter Polyolefin-basierter Kunststoffpartikel bezeichnet bzw. erachtet werden. Die strahlungsbasierte Modifikation dient dabei insbesondere zur gezielten strahlungsbasierten Beeinflussung der zellulären Eigenschaften und somit der zellulären Struktur entsprechender vorexpandierter Polyolefin-basierter Kunststoffpartikel, worunter, wie erwähnt, insbesondere eine Nach- bzw. Weiterexpansion zu verstehen ist.

Die im Weiteren auch kurz als "Kunststoffpartikel" bzw. "zelluläre Kunststoffpartikel" bezeichenbaren bzw. bezeichneten verfahrensgemäß herstellbaren bzw. hergestellten zellulären Polyolefin-basierten Kunststoffpartikel lassen sich in einem oder mehreren eigenständigen Folgeprozessen zu einem Partikelschaumformteil weiterverarbeiten. Die Weiterverarbeitung der zellulären Kunststoffpartikel zu einem Partikelschaumformteil kann unter Einsatz von Dampf bzw. Heißdampf (dampfbasiert) oder ohne Einsatz von Dampf bzw. Heißdampf (nicht-dampfbasiert bzw. trocken) erfolgen.

Die Schritte des Verfahrens zur Herstellung zellulärer Kunststoffpartikel werden im Weiteren im Einzelnen näher erläutert.

In einem ersten Schritt des Verfahrens erfolgt ein Bereitstellen eines Kunststoffmaterials in Form von vorexpandierten Polyolefin-basierten Kunststoffmaterialpartikeln. Die im Weiteren auch kurz als "vorexpandierte Kunststoffmaterialpartikel" bezeichneten, verfahrensgemäß bereitgestellten vorexpandierten Polyolefin-basierten Kunststoffmaterialpartikel können gegebenenfalls auch als "vorexpandierte Kunststoffpartikel" bezeichnet werden. Das als Ausgangsmaterial zu erachtende Kunststoffmaterial, bei welchem es sich sonach um ein Polyolefin-basiertes Partikelschaummaterial, mithin bereits um ein zelluläres Polyolefin-basiertes Kunststoffmaterial, handelt, wird in dem ersten Schritt des Verfahrens in Form vorexpandierter Kunststoffmaterialpartikel bereitgestellt. Das bereitgestellte vorexpandierte Kunststoffmaterial liegt somit partikulär, d. h. insbesondere schüttgutartig bzw. -förmig, vor. In dem ersten Schritt wird sonach im Allgemeinen wenigstens eine Maßnahme zum Bereitstellen eines partikulären, d. h. insbesondere schüttgutartigen bzw. -förmigen, vorexpandierten Kunststoffmaterials in Form entsprechender vorexpandierter Kunststoffmaterialpartikel durchgeführt. Die Dichte der in dem ersten Schritt des Verfahrens bereitgestellten vorexpandierten Kunststoffmaterialpartikel liegt je nach Materialzusammensetzung bzw. - modifikation aufgrund der zellulären Struktur typischerweise unterhalb 1 g/cm³, insbesondere in einem Bereich zwischen 0,05 und 1,5 g/cm³, woraus sich die vorexpandierten Eigenschaften der bereitgestellten vorexpandierten Kunststoffmaterialpartikel ergeben; die Matrix der bereitgestellten vorexpandierten Kunststoffmaterialpartikel weist sonach eine poröse bzw. zelluläre Struktur auf.

Die Matrix der vorexpandierten Kunststoffmaterialpartikel kann trotz ihrer zellulären Struktur gegebenenfalls wenigstens ein(en) Zusatzstoff bzw. -material, wie z. B. längliche, kugelige oder plättchenförmige Füllstoffe, enthalten. Insbesondere für vorexpandierte Kunststoffmaterialpartikel mit Zusatzstoffen bzw. -materialien kann die Dichte konzentrationsabhängig gegebenenfalls auch oberhalb von 1 g/cm³ liegen. Entsprechende Zusatzstoffe bzw. -materialien können gegebenenfalls selbst zellulär vorliegen bzw. wirken.

Der erste Schritt des Verfahrens kann, gegebenenfalls zumindest teilautomatisierbar oder teilautomatisiert, vermittels einer Bereitstellungseinrichtung, welche zum kontinuierlichen oder diskontinuierlichen Bereitstellen eines entsprechenden Kunststoffmaterials in Form von vorexpandierten Kunststoffmaterialpartikeln eingerichtet ist, ausgeführt werden. Eine entsprechende Bereitstellungseinrichtung kann z. B. eine Fördereinrichtung sein, vermittels welcher sich die zu entsprechenden zellulären Kunststoffpartikeln zu verarbeitenden vorexpandierten Kunststoffmaterialpartikel zu einer bzw. in eine den zweiten Schritt des Verfahrens ausführende(n) Beladungseinrichtung fördern lässt. Eine entsprechende Fördereinrichtung kann z. B. als Bandfördereinrichtung oder Strömungsfördereinrichtung ausgebildet sein oder eine solche umfassen. Die Förderung der vorexpandierten Kunststoffmaterialpartikel zu einer bzw. in eine den zweiten Schritt des Verfahrens ausführende(n) Beladungseinrichtung kann sonach ein Aufnehmen der vorexpandierten Kunststoffmaterialpartikel in eine Förderströmung beinhalten; die vorexpandierten Kunststoffmaterialpartikel können sonach vermittels einer Förderströmung zu einer bzw. in eine den zweiten Schritt des Verfahrens ausführende(n) Beladungseinrichtung gefördert werden.

In einem zweiten Schritt des Verfahrens erfolgt ein Beladen der vorexpandierten Kunststoffmaterialpartikel mit einem Treibmittel zumindest unter Einfluss von Druck. Die vorexpandierten Kunststoffmaterialpartikel werden in dem zweiten Schritt sonach zumindest unter Einfluss von Druck - gegebenenfalls kann materialabhängig neben einem bestimmten Druck auch eine bestimmte (erhöhte) Temperatur angewendet werden - mit einem Treibmittel beladen. In dem zweiten Schritt wird sonach im Allgemeinen wenigstens eine Maßnahme zum Beladen der vorexpandierten Kunststoffmaterialpartikel mit einem Treibmittel zumindest unter Einfluss von Druck, mithin zumindest druckbeaufschlagt, durchgeführt. Phänomenologisch erfolgt in dem zweiten Schritt des Verfahrens typischerweise eine Anreicherung des Treibmittels in den jeweiligen vorexpandierten Kunststoffmaterialpartikeln. Die Anreicherung des Treibmittels in den jeweiligen vorexpandierten Kunststoffmaterialpartikeln kann, insbesondere abhängig von der chemischen Konfiguration der vorexpandierten Kunststoffmaterialpartikel, des Treibmittels sowie der darin gegebenenfalls enthaltenen Zusatzstoffe bzw. - materialien sowie abhängig von den, wie erwähnt, typischerweise ebenso materialabhängig gewählten Druck- bzw. Temperaturbedingungen, beispielsweise aus bzw. durch Absorptions- und/oder Lösungsprozessen des Treibmittels in den jeweiligen vorexpandierten Kunststoffmaterialpartikeln resultieren. Aufgrund der zellulären Struktur der vorexpandierten Kunststoffmaterialpartikel kann eine Anreicherung bzw. Ansammlung des Treibmittels auch innerhalb der durch die zelluläre Struktur gegebenen Zellräume erfolgen; mithin kann das durch die Zellräume definierte innere Volumen eines jeweiligen vorexpandierten Kunststoffmaterial als Aufnahmeraum für die in dem zweiten Schritt des Verfahrens erfolgende Aufnahme von Treibmittel genutzt werden.

Das Druckniveau in dem zweiten Schritt des Verfahrens ist dabei, insbesondere materialabhängig, typischerweise so gewählt, dass die zelluläre Struktur der vorexpandierten Kunststoffmaterialpartikel nicht geschädigt wird; insbesondere ist das Druckniveau in dem zweiten Schritt des Verfahrens so gewählt, dass die zelluläre Struktur der vorexpandierten Kunststoffmaterialpartikel druckbedingt sich nicht in unerwünschter Weise beschädigt wird, d. h. z. B. sich plastisch verformt und sogar komplett kollabiert. In diesem Zusammenhang ist insbesondere die wirksame Differenz zwischen äußerem Beladungs- und innerzellulärem Druck von Bedeutung.

Entsprechendes gilt insbesondere für die Druckanstiegsgeschwindigkeit, d. h. die Geschwindigkeit, mit welcher der äußere Druck in dem zweiten Schritt von einem Ausgangsniveau auf ein Zielniveau erhöht wird. Typischerweise liegt die Druckanstiegsgeschwindigkeit in einem Bereich zwischen 0,001 bar pro Minute und 1000 bar pro Minute liegen. Insbesondere zwischen 0,01 bar pro Minute und 1000 bar pro Minute, weiter insbesondere zwischen 0,1 bar und 1000 bar pro Minute, weiter insbesondere zwischen 1 bar und 1000 bar pro Minute, weiter insbesondere zwischen 2, 3, 4, 5, 6, 7, 8, 9 oder 10 bar und 1000 bar pro Minute, weiter insbesondere zwischen 15, 20, 25, 30, 35, 40, 45, 50,55, 60, 65, 70, 75, 89, 85, 90, 95 oder 100 bar pro Minute und 1000 bar pro Minute, weiter insbesondere zwischen 125, 150, 175, 200, 225, 250, 275, 300, 325, 350, 375, 400, 425, 450, 475, 500, 525, 550, 575, 600,0625, 650, 675, 700, 735, 750, 775, 800, 825, 850, 875, 900,0 925, 950 oder 975 bar pro Minute und 1000 bar pro Minute. Sämtliche hier nicht explizit aufgezählten Zwischenwerte sind ebenso denkbar.

Als Treibmittel können Gase, wie z. B. Kohlendioxid oder ein Kohlendioxid und/oder Stickstoff enthaltendes Gemisch, wie z. B. Luft, verwendet werden. Im Allgemeinen können jedwede brennbare oder nicht-brennbare organische Gase, d. h. insbesondere Butan oder Pentan; oder Inertgase, wie z. B. Edelgase, d. h. insbesondere Helium, Neon, Argon; oder Stickstoff, oder Gemische hiervon verwendet werden. Der Begriff "Treibmittel" kann sonach auch ein Gemisch chemisch und/oder physikalisch verschiedener Treibmittel umfassen. Die Auswahl des Treibmittels erfolgt typischerweise unter Berücksichtigung dessen Aufnahmefähigkeit in den vorexpandierten Kunststoffmaterialpartikeln, mithin unter Berücksichtigung der chemischen und/oder physikalischen Konfiguration bzw. Zusammensetzung der vorexpandierten Kunststoffmaterialpartikel. Sofern die vorexpandierten Kunststoffmaterialpartikel Zusatzstoffe bzw. -materialen enthalten, können die Eigenschaften, wie z. B. die chemische und/oder physikalische Konfiguration der Zusatzstoffe bzw. -materialen bei der Auswahl des Treibmittels ebenso berücksichtigt werden.

Der zweite Schritt des Verfahrens kann, gegebenenfalls zumindest teilautomatisierbar oder teilautomatisiert, vermittels einer Beladungseinrichtung, welche zum Beladen der vorexpandierten Kunststoffmaterialpartikel mit einem Treibmittel zumindest unter Einfluss von Druck respektive zum Durchführen eines entsprechenden Beladungsvorgangs eingerichtet ist, ausgeführt werden. Eine entsprechende Beladungseinrichtung kann z. B. als Autoklaveinrichtung, d. h. im Allgemeinen als eine einen, gegebenenfalls temperierbaren, Druck- bzw. Prozessraum umfassende Druckbehältereinrichtung, ausgebildet sein bzw. eine solche umfassen. Eine entsprechende Beladungseinrichtung kann ferner eine Temperiereinrichtung, welche zum Temperieren eines entsprechenden Druck- bzw. Prozessraums eingerichtet ist, aufweisen. Eine entsprechende Beladungseinrichtung kann in allen Fällen eine hardware- und/oder softwaremäßig implementierte Steuerungs- und/oder Regelungseinheit aufweisen, welche zur Steuerung und/oder Regelung, d. h. im Allgemeinen zur Einstellung, bestimmter dynamischer und/oder statischer Druck- und/oder Temperaturparameter innerhalb eines entsprechenden Druck- bzw. Prozessraums eingerichtet ist.

In einem dritten Schritt des Verfahrens erfolgt ein Expandieren der mit Treibmittel beladenen vorexpandierten Kunststoffmaterialpartikel zur Herstellung zellulärer Kunststoffpartikel unter Einfluss von Temperatur, d. h. insbesondere erhöhter Temperatur. Die mit Treibmittel beladenen vorexpandierten Kunststoffmaterialpartikel werden in dem dritten Schritt des Verfahrens sonach typischerweise erhöhter Temperatur, d. h. im Allgemeinen thermischer Energie, ausgesetzt, was zu einem Ausgasen und/oder Expandieren des in den vorexpandierten Kunststoffmaterialpartikeln enthaltenen Treibmittels führt. Dies erfolgt typischerweise trocken, mithin ohne äußere Einwirkung von Fluiden, wie z. B. Dampf bzw. Wasser. Insbesondere bedingt das Ausgasen des Treibmittels in den Zellen und den Matrixbereichen der thermisch bedingt erweichenden bzw. erweichten vorexpandierten Kunststoffmaterialpartikel ein erneutes bzw. weiteres Expandieren der Kunststoffmaterialpartikel, was nach Abkühlen bzw. "Einfrieren" zur Ausbildung von Kunststoffpartikeln mit einer, gegebenenfalls gegenüber dem Ausgangsmaterial, etwa im Hinblick auf Zellanzahl und/oder Form und/oder Größe veränderten, dauerhaften zellulären Struktur und somit zur Ausbildung der herzustellenden zellulären Kunststoffpartikel führt. In dem dritten Schritt des Verfahrens wird sonach im Allgemeinen wenigstens eine Maßnahme zum Ausgasen bzw. Expandieren des in den Zellen und den Matrixbereichen der zumindest durch Einfluss von Temperatur und somit zumindest thermisch bedingt erweichenden bzw. erweichten vorexpandierten Kunststoffmaterialpartikel enthaltenen Treibmittels zur Herstellung zellulärer Kunststoffpartikel durchgeführt. Phänomenologisch erfolgen in dem dritten Schritt des Verfahrens, insbesondere aufgrund des Ausgasens bzw. der Desorption des Treibmittels aus den Zellen und den Matrixbereichen der erweichenden bzw. erweichten vorexpandierten Kunststoffmaterialpartikeln, ein weiteres, Zellwachstum sowie gegebenenfalls eine erneute Zellbildung mit nachfolgendem Zellwachstum innerhalb der vorexpandierten Kunststoffmaterialpartikel, welches zu den herzustellenden zellulären Kunststoffpartikeln führt, welche im Vergleich zu den vorexpandierten Kunststoffpartikeln eine, gegebenenfalls deutlich, geringere Dichte aufweisen. Die Zellbildung, sofern eine solche erfolgt, basiert dabei typischerweise auf der erwähnten Desorption des Treibmittels an Nukleierungspunkten in den durch Temperatureinfluss erweichenden bzw. erweichten Kunststoffmaterialpartikeln, während das Zellwachstum typischerweise auf einer überdruckbedingten Expansion des Treibmittels in bereits gebildeten bzw. vorhandenen Zellen basiert. Wie ebenso erwähnt, wird die derart gebildete zelluläre Struktur bzw. der damit realisierte weitere Expansionszustand durch die bzw. eine Temperaturabsenkung der sonach hergestellten zellulären Kunststoffpartikeln, also durch deren Abkühlung, z. B. an der Umgebung, dauerhaft "eingefroren" bzw. fixiert.

Grundsätzlich gilt sonach, dass nach Abschluss der in dem zweiten Schritt des Verfahrens erfolgenden Druckbeaufschlagung, d. h. bei einem Druckabfall, insbesondere auf Normal- bzw. Standardbedingungen, Ausgas- bzw. Desorptionsprozesse innerhalb jeweiliger mit Treibmittel beladender und typischerweise thermisch bedingt erweichter vorexpandierter Kunststoffmaterialpartikel erfolgen. Die Ausgas- bzw. Desorptionsprozesse des Treibmittels stellen eine wesentliche Voraussetzung für die für die Herstellung zellulärer Kunststoffpartikel erforderlichen Zellwachstumsprozesse und gegebenenfalls Zellbildungsprozesse innerhalb jeweiliger Kunststoffmaterialpartikel dar. Aus den nach dem zweiten Schritt des Verfahrens vorliegenden, mit Treibmittel beladenen und typischerweise thermisch bedingt erweichten vorexpandierten Kunststoffmaterialpartikeln, werden in dem dritten Schritt des Verfahrens, insbesondere bedingt durch entsprechende Ausgas- bzw. Desorptionsprozesse, die verfahrensgemäß herzustellenden zellulären Kunststoffpartikel gebildet.

Wie erwähnt, weisen die verfahrensgemäß herzustellenden bzw. hergestellten zellulären Kunststoffpartikel eine geringere Dichte als die vorexpandierten Kunststoffpartikel auf, sodass das Verfahren, wie ebenso erwähnt, zur Herstellung zellulärer Kunststoffpartikel geringerer Dichte dient und somit auch als Verfahren zur strahlungsbasierten Modifikation, d. h. insbesondere zur strahlungsbasierten Nach- bzw. Weiterexpansion, vorexpandierter Kunststoffpartikel bezeichnet bzw. erachtet werden kann.

Wie im Weiteren erläutert wird, können durch Steuerung entsprechender ausgas- bzw. desorptionsbedingt erfolgender Zellbildungs- und Zellwachstumsprozesse gegebenenfalls zelluläre Strukturen mit lokal unterschiedlichen Zelleigenschaften und somit gradierte zelluläre Kunststoffpartikel realisiert werden.

Im Allgemeinen gilt, dass verfahrensgemäß insbesondere zelluläre Kunststoffpartikel mit einer Zellgröße in einem Bereich zwischen 0,5 und 250 µm hergestellt werden können. Die tatsächliche Zellgröße - selbstverständlich ist hier typischerweise ein Durchschnitt angesprochen - kann sonach verfahrensgemäß je nach den gewählten Prozessbedingungen über einen sehr weiten Bereich und somit maßgeschneidert eingestellt werden. Entsprechendes gilt für eine etwaige Verteilung der Zellgrößen innerhalb jeweiliger zellulärer Kunststoffpartikel.

Insbesondere gilt, dass sich mit dem hierin beschriebenen Verfahren zelluläre Kunststoffpartikel mit einer (mittleren) Zellgröße unterhalb 250 µm, insbesondere unterhalb 240 µm, weiter insbesondere unterhalb 230 µm, weiter insbesondere unterhalb 220 µm, weiter insbesondere unterhalb 210 µm, weiter insbesondere unterhalb 200 µm, weiter insbesondere unterhalb 190 µm, weiter insbesondere unterhalb 180 µm, weiter insbesondere unterhalb 170 µm, weiter insbesondere unterhalb 160 µm, weiter insbesondere unterhalb 150 µm, weiter insbesondere unterhalb 140 µm, weiter insbesondere unterhalb 130 µm, weiter insbesondere unterhalb 120 µm, weiter insbesondere unterhalb 110 µm, weiter insbesondere unterhalb 100 µm, weiter insbesondere unterhalb 90 µm, weiter insbesondere unterhalb 80 µm, weiter insbesondere unterhalb 70 µm, weiter insbesondere unterhalb 60 µm, weiter insbesondere unterhalb 50 µm, weiter insbesondere unterhalb 45 µm, weiter insbesondere unterhalb 40 µm, weiter insbesondere unterhalb 35 µm, weiter insbesondere unterhalb 30 µm, weiter insbesondere unterhalb 25 µm, weiter insbesondere unterhalb 24 µm, weiter insbesondere unterhalb 23 µm, weiter insbesondere unterhalb 22 µm, weiter insbesondere unterhalb 21 µm, weiter insbesondere unterhalb 20 µm, weiter insbesondere unterhalb 19 µm, weiter insbesondere unterhalb 18 µm, weiter insbesondere unterhalb 17 µm, weiter insbesondere unterhalb 16 µm, weiter insbesondere unterhalb 15 µm, weiter insbesondere unterhalb 14 µm, weiter insbesondere unterhalb 13 µm, weiter insbesondere unterhalb 12 µm, weiter insbesondere unterhalb 11 µm, weiter insbesondere unterhalb 10 µm, oder noch geringer ausbilden lassen. Sämtliche hier nicht explizit aufgezählten Zwischenwerte sind ebenso denkbar.

Der dritte Schritt des Verfahrens kann, gegebenenfalls zumindest teilautomatisierbar oder teilautomatisiert, vermittels einer Expansionseinrichtung, welche zum strahlungsbasierten Expandieren des Treibmittels zur Herstellung zellulärer Kunststoffpartikel zumindest unter Einfluss von Temperatur zum Durchführen eines entsprechenden strahlungsbasierten Expansionsvorgangs eingerichtet ist, ausgeführt werden. Eine entsprechende Expansionseinrichtung ist typischerweise als strahlungsbasierte Heizeinrichtung, d. h. im Allgemeinen als eine einen zumindest strahlungsbasiert temperierbaren bzw. temperierten Temperier- bzw. Prozessraum umfassende Temperiereinrichtung, ausgebildet sein bzw. eine solche umfassen. Eine entsprechende Temperiereinrichtung kann ferner eine Fördereinrichtung, welche zum Fördern der zu expandierenden Kunststoffmaterialpartikel entlang einer Förderstrecke durch einen entsprechenden Temperier- bzw. Prozessraum eingerichtet ist, aufweisen. Eine entsprechende Expansionseinrichtung kann in allen Fällen eine hardware- und/oder softwaremäßig implementierte Steuerungs- und/oder Regelungseinheit aufweisen, welche zur Steuerung und/oder Regelung, d. h. im Allgemeinen zur Einstellung, bestimmter dynamischer und/oder statischer Förder- und/oder Temperatur- und/oder Strahlungsparameter innerhalb eines entsprechenden Temperier- bzw. Prozessraums eingerichtet ist.

Insbesondere kann der dritte Schritt des Verfahrens gegebenenfalls kontinuierlich durchgeführt werden, was vorteilhaft gegenüber den eingangs genannten batchweisen Autoklav-basierten Prozessen ist.

Die Dichte der in dem dritten Schritt des Verfahrens hergestellten zellulären Kunststoffpartikel liegt typischerweise deutlich unterhalb der Ausgangsdichte der in dem ersten Schritt bereitgestellten vorexpandierten Kunststoffmaterialpartikel, woraus sich die zellulären Eigenschaften der verfahrensgemäß herstellbaren bzw. hergestellten Kunststoffpartikel ergeben. Die Schüttdichte der in dem dritten Schritt des Verfahrens hergestellten zellulären Kunststoffpartikel liegt entsprechend deutlichunterhalb der Schüttdichte der in dem ersten Schritt des Verfahrens bereitgestellten vorexpandierten Kunststoffmaterialpartikel.

Die in dem dritten Schritt des Verfahrens hergestellten zellulären Kunststoffpartikel sind, wie weiter oben erwähnt, typischerweise weiter- bzw. nachexpandierbar; dies kann eine wesentliche Eigenschaft für die beschriebene, insbesondere dampfbasierte oder nicht-dampfbasierte, Weiterverarbeitung der zellulären Kunststoffpartikel zur Herstellung von Partikelschaumformteilen darstellen.

Das Verfahren zeichnet sich gegenüber bekannten Verfahren sonach durch eine besondere dynamische Prozessführung aus, welche ein für eine Expansion erforderliches Erweichen, aber im Gegensatz zu einem Extrusionsprozess kein komplettes Aufschmelzen eines mit Treibmittel beladenen vorexpandierten Kunststoffmaterials und damit kein druck- und temperaturintensives Beladen einer Kunststoffmaterialschmelze mit einem Treibmittel erfordert. Die dynamische Prozessführung, d. h. insbesondere die damit mögliche schnelle (Volumen-)Erwärmung - im Gegensatz zu konvektivem und konduktivem Energietransport beim dampfbasierten Nachschäumen -, ist zudem von Bedeutung für eine gute Energieeffizienz und die weiter unten erwähnte, deutlich feinere Zellmorphologie (wegen fehlender Zeit für Zellvereinigungen). Das Verfahren geht sonach mit einem im Vergleich (deutlich) vereinfachten anlagen- wie auch prozesstechnischen Aufwand zu dessen Durchführung einher, als vorexpandierte Kunststoffmaterialpartikel mit einem Treibmittel beladen, und entsprechende mit Treibmittel beladene Kunststoffmaterialpartikel zumindest unter Einfluss von Temperatur, insbesondere unter Einfluss von Temperatur und Druck, in zelluläre Kunststoffpartikel überführt werden können.

Zudem sind die Eigenschaften der verfahrensgemäß herstellbaren bzw. hergestellten zellulären Kunststoffpartikel, insbesondere im Hinblick auf Anzahl, Größe, Form und Verteilung der Zellen, verbessert, was sich aus den einfach einstellbar und sehr gut kontrollierbaren Prozessbedingungen im Rahmen des in dem zweiten Schritt des Verfahrens erfolgenden Beladens sowie im Rahmen des in dem dritten Schritt des Verfahrens erfolgenden Expandierens ergibt.

Im Gegensatz zu den eingangs beschriebenen Autoklav-basierten Expansionsprozessen ermöglicht das Verfahren einen kontinuierlichen Expansionsvorgang entsprechender mit Treibmittel beladener vorexpandierter Kunststoffpartikel, welcher mangels Einsatz von Heißdampf keine nachfolgende Trocknung erfordert.

Das Verfahren ermöglicht damit ein deutlich erweitertes und für jedes Kunststoffmaterial genau einstell- bzw. regelbares Prozessfenster, welches es prinzipiell ermöglicht, zelluläre Kunststoffpartikel mit gewünschten Eigenschaften aus jedweden (thermoplastischen) vorexpandierten Kunststoffmaterialpartikeln herzustellen.

Wie angedeutet, kann das Beladen der vorexpandierten Kunststoffmaterialpartikel mit einem Treibmittel unter Einfluss von Druck und Temperatur durchgeführt werden. Die sonach zum Beladen der vorexpandierten Kunststoffmaterialpartikel mit Treibmittel sowie im Weiteren zur gezielten Einstellung bestimmter Eigenschaften der herzustellenden bzw. hergestellten zellulären Kunststoffpartikel, insbesondere materialabhängig, variierbaren Parameter sind sonach zunächst die in dem zweiten Schritt des Verfahrens herrschenden Druck- und Temperaturverhältnisse. Selbstverständlich ist auch die Zeit, d. h. insbesondere der Verlauf und die Dauer der Druck- und Temperaturverhältnisse, in dem zweiten Schritt des Verfahrens, ein Parameter, welcher einen Einfluss auf das Beladen der vorexpandierten Kunststoffmaterialpartikel mit Treibmittel, d. h. insbesondere das Aufnahmen des Treibmittels in den vorexpandierten Kunststoffmaterialpartikeln, hat.

Konkrete Parameter für die Durchführung des zweiten Schritts des Verfahrens werden nachfolgend beispielhaft genannt:
Das Beladen der vorexpandierten Kunststoffmaterialpartikel mit dem bzw. einem Treibmittel kann z. B., insbesondere in Abhängigkeit der chemischen Zusammensetzung der vorexpandierten Kunststoffmaterialpartikel und/oder des Treibmittels, bei einem Druck in einem Bereich zwischen 1 und 200 bar, insbesondere in einem Bereich zwischen 1 und 190 bar, weiter insbesondere in einem Bereich zwischen 1 und 180 bar, weiter insbesondere in einem Bereich zwischen 1 und 170 bar, weiter insbesondere in einem Bereich zwischen 1 und 160 bar, weiter insbesondere in einem Bereich zwischen 1 und 150 bar, weiter insbesondere in einem Bereich zwischen 1 und 140 bar, weiter insbesondere in einem Bereich zwischen 1 und 130 bar, weiter insbesondere in einem Bereich zwischen 1 und 120 bar, weiter insbesondere in einem Bereich zwischen 1 und 110 bar, weiter insbesondere in einem Bereich zwischen 1 und 100 bar, weiter insbesondere in einem Bereich zwischen 1 und 90 bar, weiter insbesondere in einem Bereich zwischen 1 und 80 bar, weiter insbesondere in einem Bereich zwischen 1 und 70 bar, weiter insbesondere in einem Bereich zwischen 1 und 60 bar, weiter insbesondere in einem Bereich zwischen 1 und 50 bar, weiter insbesondere in einem Bereich zwischen 1 und 40 bar, weiter insbesondere in einem Bereich zwischen 1 und 30 bar, weiter insbesondere in einem Bereich zwischen 1 und 20 bar, weiter insbesondere in einem Bereich zwischen 1 und 10 bar, durchgeführt werden. Als untere Grenze kann anstelle von 1 bar auch 2, 3, 4, 5, 6, 7, 8, 9 oder 10 bar verwendet werden. Die vorstehend, wie erwähnt, beispielhaft genannten Drücke beziehen sich insbesondere auf Drücke innerhalb eines Druck- bzw. Prozessraums einer entsprechenden Beladungseinrichtung während der Ausführung des zweiten Schritts des Verfahrens. Sämtliche hier nicht explizit aufgezählten Zwischenwerte sind ebenso denkbar.

Wie erwähnt, ist das Druckniveau und insbesondere die Druckanstiegsgeschwindigkeit in dem zweiten Schritt des Verfahrens dabei, insbesondere materialabhängig, typischerweise so gewählt, dass die zelluläre Struktur der vorexpandierten Kunststoffmaterialpartikel nicht geschädigt wird; insbesondere sind das Druckniveau und insbesondere die Druckanstiegsgeschwindigkeit in dem zweiten Schritt des Verfahrens so gewählt, dass die zelluläre Struktur der vorexpandierten Kunststoffmaterialpartikel druckbedingt (wirksame Differenz zwischen äußerem Beladungs- und innerzellulärem Druck) sich nicht plastisch verformt und gegebenenfalls sogar kollabiert.

Das Beladen der vorexpandierten Kunststoffmaterialpartikel mit dem bzw. einem Treibmittel kann z. B., insbesondere in Abhängigkeit der chemischen Zusammensetzung der vorexpandierten Kunststoffmaterialpartikel und/oder des Treibmittels, bei einer Temperatur in einem Bereich zwischen 0 und 250°C, weiter insbesondere in einem Bereich zwischen 0 und 240°C, weiter insbesondere in einem Bereich zwischen 0 und 230°C, weiter insbesondere in einem Bereich zwischen 0 und 220°C, weiter insbesondere in einem Bereich zwischen 0 und 210°C, weiter insbesondere in einem Bereich zwischen 0 und 200°C, weiter insbesondere in einem Bereich zwischen 0 und 190°C, weiter insbesondere in einem Bereich zwischen 0 und 180°C, weiter insbesondere in einem Bereich zwischen 0 und 170°C, weiter insbesondere in einem Bereich zwischen 0 und 160°C, weiter insbesondere in einem Bereich zwischen 0 und 150°C, weiter insbesondere in einem Bereich zwischen 0 und 140°C, weiter insbesondere in einem Bereich zwischen 0 und 130°C, weiter insbesondere in einem Bereich zwischen 0 und 120°C, weiter insbesondere in einem Bereich zwischen 0 und 110°C, weiter insbesondere in einem Bereich zwischen 0 und 100°C, weiter insbesondere in einem Bereich zwischen 0 und 90°C, weiter insbesondere in einem Bereich zwischen 0 und 80°C, weiter insbesondere in einem Bereich zwischen 0 und 70°C, weiter insbesondere in einem Bereich zwischen 0 und 60°C, weiter insbesondere in einem Bereich zwischen 0 und 50°C, weiter insbesondere in einem Bereich zwischen 0 und 40°C, weiter insbesondere in einem Bereich zwischen 0 und 30°C, weiter insbesondere in einem Bereich zwischen 0 und 20°C, durchgeführt werden. Die vorstehend, wie erwähnt, beispielhaft genannten Temperaturen beziehen sich insbesondere auf Temperaturen innerhalb eines Druck- bzw. Prozessraums einer entsprechenden Beladungseinrichtung während der Ausführung des zweiten Schritts des Verfahrens. Sämtliche hier nicht explizit aufgezählten Zwischenwerte sind ebenso denkbar.

Das Beladen der vorexpandierten Kunststoffmaterialpartikel mit dem bzw. einem Treibmittel kann z. B., insbesondere in Abhängigkeit der chemischen Zusammensetzung der vorexpandierten Kunststoffmaterialpartikel und/oder des Treibmittels, für eine Zeitdauer in einem Bereich zwischen 0,1 und 1000 h, insbesondere in einem Bereich zwischen 0,1 und 950 h, weiter insbesondere in einem Bereich zwischen 0,1 und 900 h, weiter insbesondere in einem Bereich zwischen 0,1 und 850h, weiter insbesondere in einem Bereich zwischen 0,1 und 800 h, weiter insbesondere in einem Bereich zwischen 0,1 und 750 h, weiter insbesondere in einem Bereich zwischen 0,1 und 700 h, weiter insbesondere in einem Bereich zwischen 0,1 und 650 h, weiter insbesondere in einem Bereich zwischen 0,1 und 600 h, weiter insbesondere in einem Bereich zwischen 0,1 und 550 h, weiter insbesondere in einem Bereich zwischen 0,1 und 500 h, weiter insbesondere in einem Bereich zwischen 0,1 und 450 h, weiter insbesondere in einem Bereich zwischen 0,1 und 400 h, weiter insbesondere in einem Bereich zwischen 0,1 und 350 h, weiter insbesondere in einem Bereich zwischen 0,1 und 300 h, weiter insbesondere in einem Bereich zwischen 0,1 und 250 h, weiter insbesondere in einem Bereich zwischen 0,1 und 200 h, weiter insbesondere in einem Bereich zwischen 0,1 und 150 h, weiter insbesondere in einem Bereich zwischen 0,1 und 100 h, insbesondere in einem Bereich zwischen 0,1 und 90 h, insbesondere in einem Bereich zwischen 0,1 und 80 h, insbesondere in einem Bereich zwischen 0,1 und 70 h, insbesondere in einem Bereich zwischen 0,1 und 60 h, insbesondere in einem Bereich zwischen 0,1 und 50 h, insbesondere in einem Bereich zwischen 0,1 und 40 h, insbesondere in einem Bereich zwischen 0,1 und 30 h, insbesondere in einem Bereich zwischen 0,1 und 20 h, insbesondere in einem Bereich zwischen 0,1 und 10 h, durchgeführt werden. Die vorstehend, wie erwähnt, beispielhaft genannten Zeitdauern beziehen sich insbesondere auf die Druck- bzw. Temperaturbeaufschlagung der Kunststoffmaterialpartikel innerhalb eines Druck- bzw. Prozessraums einer entsprechenden Beladungseinrichtung während der Ausführung des zweiten Schritts des Verfahrens. Sämtliche hier nicht explizit aufgezählten Zwischenwerte sind ebenso denkbar.

Konkrete Parameter für die Durchführung des dritten Schritts des Verfahrens werden nachfolgend beispielhaft genannt:
Das Expandieren der mit Treibmittel beladenen Kunststoffmaterialpartikel zur Herstellung der zellulären Kunststoffpartikel unter Einfluss von Temperatur, insbesondere in Abhängigkeit der chemischen Zusammensetzung der mit Treibmittel beladenen Kunststoffpartikelmaterial und/oder des Treibmittels, kann z. B. bei Normaldruck, mithin einem Umgebungsdruck von ca. 1 bar, durchgeführt werden. Ein besonderes Druckniveau, wie z. B. ein Über- oder Unterdruckniveau, ist zum Expandieren der mit Treibmittel beladenen vorexpandierten Kunststoffmaterialpartikel zur Herstellung der zellulären Kunststoffpartikel sonach möglich, aber nicht zwingend erforderlich, was den Expansionsvorgang grundsätzlich vereinfacht.

Das Expandieren der mit Treibmittel beladenen Kunststoffmaterialpartikel zur Herstellung der zellulären Kunststoffpartikel unter Einfluss von Temperatur kann z. B., insbesondere in Abhängigkeit der chemischen Zusammensetzung des mit Treibmittel beladenen Kunststoffpartikelmaterials und/oder des Treibmittels, bei einer Temperatur in einem Bereich zwischen 20 und 300°C, insbesondere in einem Bereich zwischen 20 und 290°C, weiter insbesondere in einem Bereich zwischen 20 und 280°C, weiter insbesondere in einem Bereich zwischen 20 und 270°, weiter insbesondere in einem Bereich zwischen 20 und 260°C, weiter insbesondere in einem Bereich zwischen 20 und 250°C, weiter insbesondere in einem Bereich zwischen 20 und 240°C, weiter insbesondere in einem Bereich zwischen 20 und 230°C, weiter insbesondere in einem Bereich zwischen 20 und 220°C, weiter insbesondere in einem Bereich zwischen 20 und 210°C, weiter insbesondere in einem Bereich zwischen 20 und 200°C, weiter insbesondere in einem Bereich zwischen 20 und 190°C, weiter insbesondere in einem Bereich zwischen 20 und 180°C, weiter insbesondere in einem Bereich zwischen 20 und 170°C, weiter insbesondere in einem Bereich zwischen 20 und 160°C, weiter insbesondere in einem Bereich zwischen 20 und 150°C, weiter insbesondere in einem Bereich zwischen 20 und 140°C, weiter insbesondere in einem Bereich zwischen 20 und 130°C, weiter insbesondere in einem Bereich zwischen 20 und 120°C, weiter insbesondere in einem Bereich zwischen 20 und 110°C, weiter insbesondere in einem Bereich zwischen 20 und 100°C, weiter insbesondere in einem Bereich zwischen 20 und 90°C, weiter insbesondere in einem Bereich zwischen 20 und 80°C, weiter insbesondere in einem Bereich zwischen 20 und 70°C, weiter insbesondere in einem Bereich zwischen 20 und 60°C, weiter insbesondere in einem Bereich zwischen 20 und 50°C, weiter insbesondere in einem Bereich zwischen 20 und 40°C, weiter insbesondere in einem Bereich zwischen 20 und 30°C durchgeführt werden Sämtliche hier nicht explizit aufgezählten Zwischenwerte sind ebenso denkbar.

Die vorstehend genannten Temperaturen können sich insbesondere auf eine Eintrittstemperatur bei Eintritt der mit Treibmittel beladenen vorexpandierten Kunststoffmaterialpartikel in eine entsprechende Expansionseinrichtung und/oder auf eine Austrittstemperatur bei Austritt der zellulären Kunststoffpartikel aus einer entsprechenden Expansionseinrichtung beziehen. Entsprechende Eintritts- und Austrittstemperaturen können gleich, ähnlich oder verschieden sein. Sofern eine entsprechende Expansionseinrichtung eine Fördereinrichtung aufweist, welche eingerichtet ist, die mit Treibmittel beladenen Kunststoffmaterialpartikel entlang entsprechender Temperiereinrichtungen zu befördern, können sich die vorgenannten Temperaturen auf eine Temperatur bei Eintritt des mit Treibmittel beladenen vorexpandierten Kunststoffpartikelmaterials in eine entsprechende Expansions- bzw. Temperiereinrichtung (Eintrittstemperatur), mithin auf einen Anfangsbereich einer entsprechenden Fördereinrichtung, und/oder auf eine Austrittstemperatur bei Austritt der Kunststoffpartikel aus einer entsprechenden Expansions- bzw. Temperiereinrichtung (Austrittstemperatur), mithin auf einen Endbereich einer entsprechenden Fördereinrichtung, beziehen. Typischerweise ist die Eintrittstemperatur geringer als die Austrittstemperatur.

Das Expandieren der mit Treibmittel beladenen vorexpandierten Kunststoffmaterialpartikel unter Einfluss von Temperatur erfolgt durch Bestrahlen der mit Treibmittel beladenen vorexpandierten Kunststoffpartikelmaterial mit Infrarot-Strahlung. Insbesondere kommt Infrarot-Strahlung mit Wellenlängen in einem Bereich zwischen 1 und 15 µm, insbesondere zwischen 1,4 und 8 µm, weiter insbesondere zwischen 1,4 und 3 µm, in Betracht. Die Wellenlängen der Infrarot-Strahlung sind typischerweise materialabhängig gewählt. Die Temperierung, d. h. insbesondere das Beheizen, der mit Treibmittel beladenen vorexpandierten Kunststoffmaterialpartikel kann dabei, insbesondere materialabhängig, durch eine Auswahl und/oder Einstellung der Eigenschaften der verwendeten energiereichen Strahlung, d. h. insbesondere deren Wellenlänge, sehr gezielt erfolgen, ohne bei einem mit einem Erwärmen der mit Treibmittel beladenen vorexpandierten Kunststoffmaterialpartikel einhergehenden Erweichen derselben ein für den Expansionsvorgang der mit Treibmittel beladenen Kunststoffmaterialpartikel unerwünschtes Auf- bzw. Durchschmelzen, also zu geringe Stabilitäten der erweichten Kunststoffmaterialpartikel, zu riskieren. Hierbei zeigte sich Infrarot-Strahlung in Untersuchungen als besonders geeignet, als diese eine gezielte und in Verbindung mit einer Fördereinrichtung sehr gut kontrollierbare Volumenerwärmung der mit Treibmittel beladenen vorexpandierten Kunststoffmaterialpartikel, einen kontrollierbaren Erweichungsvorgang und damit - dies ist für die Einstellung der Eigenschaften der herzustellenden zellulären Kunststoffpartikel wesentlich - einen kontrollierbaren Expansionsvorgang ermöglicht.

Das Expandieren der mit Treibmittel beladenen Kunststoffmaterialpartikel erfolgt unter Einfluss von Temperatur durch Bestrahlen der mit einem Treibmittel beladenen vorexpandierten Kunststoffmaterialpartikel mit energiereicher Wärmestrahlung, nämlich Infrarot-Strahlung, wobei die mit Treibmittel beladenen Kunststoffmaterialpartikel auf wenigstens einer durch eine Fördereinrichtung definierten Förderstrecke, insbesondere kontinuierlich, entlang wenigstens einer entsprechende energiereiche Strahlung, d. h. Infrarot-Strahlung, erzeugenden Strahlungserzeugungseinrichtung gefördert werden. Eine entsprechende Strahlungserzeugungseinrichtung kann insbesondere als ein Infrarot-Ofen, insbesondere ein Infrarot-Durchlaufofen, ausgebildet sein oder einen solchen umfassen. Ein entsprechender Infrarot-Ofen kann ein oder mehrere entlang einer entsprechenden Förderstrecke angeordnete oder ausgebildete Infrarot-Strahler umfassen. Entsprechende Infrarot-Strahler können beispielsweise eine, gegebenenfalls variable, Abstrahlleistung in einem Bereich zwischen 1 und 500 kW, weiter insbesondere in einem Bereich zwischen 1 und 450 kW, weiter insbesondere in einem Bereich zwischen 1 und 400 kW, weiter insbesondere in einem Bereich zwischen 1 und 350 kW, weiter insbesondere in einem Bereich zwischen 1 und 250 kW, weiter insbesondere in einem Bereich zwischen 1 und 200 kW, weiter insbesondere in einem Bereich zwischen 1 und 150 kW, weiter insbesondere in einem Bereich zwischen 1 und 100 kW, weiter insbesondere in einem Bereich zwischen 1 und 50 kW, aufweisen. Als untere Grenze kann anstelle von 1 kW auch 2, 3, 4, 5, 6, 7, 8, 9 oder 10 kW verwendet werden. Sämtliche hier nicht explizit aufgezählten Zwischenwerte sind ebenso denkbar.

Die vorstehend genannten Leistungen können sich insbesondere auf Flächenleistung pro m² beziehen. In Untersuchungen ergab sich dabei, dass insbesondere Flächenleistungen zwischen 5 und 100 kW/m² gute Ergebnisse lieferten. Durch variable Strahler bzw. variable Strahler(flächen)leistungen können unterschiedliche Temperaturzonen erzeugt werden, wodurch ebenso ein Parameter zur Beeinflussung des Expansionsvorgangs gegeben ist.

Verfahrensgemäß kann nach dem Expandieren der mit Treibmittel beladenen Kunststoffmaterialpartikel zur Herstellung der zellulären Kunststoffpartikel unter Einfluss von (insbesondere im Vergleich zu dem vorher erfolgten Expansionsvorgang erniedrigter) Temperatur, wie weiter oben angedeutet, ein Abkühlen der hergestellten zellulären Kunststoffpartikel durchgeführt werden. Durch das, zweckmäßig rasch, erfolgende Abkühlen kann ein "Einfrieren" der nach dem Expansionsvorgang vorliegenden zellulären Struktur der zellulären Kunststoffpartikel erfolgen. Derart kann eine nach dem Expansionsvorgang gegebenenfalls unerwünschte weitere, integrale oder auch nur lokale Expansion der Kunststoffpartikel gezielt unterbunden werden, etwa um eine nach dem Expansionsvorgang gegebenenfalls gewünschte zelluläre Struktur der Kunststoffpartikel beizubehalten. Das Abkühlen kann insbesondere von einer oberhalb einer Referenztemperatur, insbesondere kann Raumtemperatur als Referenztemperatur verwendet werden, liegenden Prozesstemperatur auf eine unterhalb der Prozess- bzw. Referenztemperatur liegende Abkühltemperatur, insbesondere Raumtemperatur, erfolgen. Mithin sind gesonderte Temperiereinrichtungen zum Abkühlen der Kunststoffpartikel nicht zwingend erforderlich, sondern es kann genügen, wenn die Kunststoffpartikel nach dem Expansionsvorgang auf Raumtemperatur abgekühlt bzw. bei Raumtemperatur ausgelagert werden.

Verfahrensgemäß kann, wie ebenso weiter oben angedeutet, ein wenigstens einen, insbesondere funktionalen, Zusatzstoff bzw. -material bzw. Additiv, beispielsweise einen Faserstoff bzw. -material und/oder einen Farbstoff bzw. - material und/oder einen Nukleierungsstoff bzw. -material und/oder einen Stoff bzw. ein Material, wie z. B. Zusätze zur Anpassung einer Schmelzeviskosität, wie z.B. Kettenver-längerer, oder zur Erhöhung des Absorptionskoeffizienten, wie Graphit, Ruß, etc., zur gezielten Beeinflussung bzw. Steuerung des Erweichungsverhaltens der mit Treibmittel beladenen Kunststoffmaterialpartikel, enthaltendes vorexpandiertes Kunststoffpartikelmaterial, bereitgestellt bzw. verwendet werden. Alternativ oder ergänzend kann wenigstens ein Additiv aus der Gruppe: Antioxidans, UV-Stabilisator, Antistatik-Additiv, Fließ- oder AntihaftAdditiv, Flammschutzadditiv, Pigment, Farbstoff und Mischungen der Vorgenannten, enthaltendes vorexpandiertes Kunststoffpartikelmaterial bereitgestellt bzw. verwendet werden. Ein Antioxidans kann z. B. einen Anteil in einem Bereich zwischen 0 und 2,5 Gew.-%, insbesondere zwischen 0 und 1 Gew.-%; ein UV-Stabilisator, wie z. B. Amin- oder Nickel-Basierte UV-Stabilisatoren, kann z. B. einen Anteil zwischen 0 und 5 Gew.-%, insbesondere zwischen 0 und 2,5 Gew.-% (für Amin- oder Nickel-basierte UV-Stabilisatoren gilt insbesondere ein Anteil zwischen 0 und 5 Gew.-%, weiter insbesondere zwischen 0 und 2,5 Gew.-%); ein Antistatik-Additiv einen Anteil zwischen 0 und 5 Gew.-%, insbesondere zwischen 0 und 1 Gew.-2,5 Gew.-%; ein Fließ- oder Antihaftadditiv einen Anteil zwischen 0 und 5 Gew.-%, insbesondere zwischen 0 und 2,5 Gew.-%; ein Antiblock-Additiv einen Anteil zwischen 0 und 5 Gew.-%, insbesondere zwischen 0 und 2,5 Gew.-%; ein Nukleierungsadditiv einen Anteil zwischen 0 und 5 Gew.-%, insbesondere zwischen 0 und 2,5 Gew.-%, und ein Flammschutzadditiv einen Anteil zwischen 0 and 65 Gew.-%, insbesondere zwischen 0 und 20 Gew.-%, weiter insbesondere zwischen 0 und 5 Gew.-%, weiter insbesondere zwischen 0 und 2,5 Gew.-% aufweisen. Pigmente bzw. Farbstoff, wie z. B. Ruß, können (jeweils) einen Anteil zwischen 0 und 15 Gew.-% aufweisen.

Mithin können verfahrensgemäß auch compoundierte und vorexpandierte Kunststoffmaterialpartikel mit Treibmittel beladen und expandiert werden, was zu zellulären Kunststoffpartikeln mit besonderen Eigenschaften führt. Insbesondere sind durch eine gezielte Auswahl und Konzentration entsprechender Zusatzstoffe bzw. -materialien für bestimmte Applikationen oder Anwendungsgebiete maßgeschneiderte Kunststoffpartikel herstellbar. Die Zusatzstoffe bzw. -materialien können im Rahmen der Herstellung der vorexpandierten Kunststoffmaterialpartikel in diese eingebracht worden sein.

Insbesondere durch Faserstoffe bzw. -materialien - hierbei kann es sich grundsätzlich um organische oder um anorganische Faserstoffe bzw. -materialien handeln, mithin sind beispielhaft z. B. Aramid, Glas-, Kohle- oder Naturfasern zu nennen - lassen sich, im Hinblick auf die weitere Verarbeitung, besondere Materialeigenschaften der verfahrensgemäß herstellbaren bzw. hergestellten zellulären Kunststoffpartikel respektive eines aus den verfahrensgemäß herstellbaren bzw. hergestellten zellulären Kunststoffpartikeln hergestellten Partikelschaumformteils realisieren. Entsprechende zelluläre Kunststoffpartikel respektive aus diesen hergestellte Partikelschaumformteile können sich einerseits aufgrund ihrer zellularen Struktur durch eine besondere Dichte und andererseits insbesondere durch, verarbeitungsbedingt, entstehende mechanische Verbindungen benachbarter Zellen innerhalb jeweiliger zellulärer Kunststoffpartikel und/oder zwischen jeweiligen benachbarten zellulären Kunststoffpartikeln durch besondere mechanische Eigenschaften auszeichnen. Bei der nachfolgenden Verarbeitung zu Partikelschaumformteilen können diese besonderen mechanischen Eigenschaften lokal oder integral genutzt bzw. noch modifiziert werden. Analoges gilt - grundsätzlich unabhängig von deren chemischer Zusammensetzung für nicht faserartige bzw. -förmige Zusatzstoffe bzw. -materialien, wie z. B. für kugelartige bzw. - förmige oder plättchenartige bzw. -förmige organische und/oder anorganische Zusatzstoffe bzw. -materialien.

Neben einer gezielten Beeinflussung der mechanischen Eigenschaften der Kunststoffpartikel können sich durch entsprechende Zusatzstoffe bzw. - materialien z. B. auch die elektrischen Eigenschaften und/oder die thermischen Eigenschaften der Kunststoffpartikel gezielt beeinflussen lassen. Mithin sind, etwa durch elektrisch und/oder thermisch leitfähige Zusatzstoffe bzw. -materialien, wie z. B. Metall- und/oder Rußpartikel, etc., Kunststoffpartikel mit besonderen elektrisch und/oder thermisch leitfähigen Eigenschaften herstellbar.

Die Konzentration entsprechender Zusatzstoffe bzw. -materialien kann grundsätzlich, wenngleich typischerweise materialabhängig, frei gewählt werden. Mithin wird lediglich beispielhaft angegeben, dass vorexpandierte Kunststoffmaterialpartikel mit einem (oder mehreren) Zusatzstoff(en) bzw. -material(ien) in einer (jeweiligen) Konzentration zwischen 0,01 Gew.-%, dies gilt insbesondere für chemisch aktive Zusätze, und 60 Gew.-%, dies gilt insbesondere für faserige Zusätze, bereitgestellt bzw. verwendet werden können. Wie angedeutet, ist die Konzentration typischerweise abhängig von den konkreten chemischen und/oder physikalischen Eigenschaften der Zusatzstoffe bzw. -materialien bzw. deren Kombination.

Es wurde erwähnt, dass verfahrensgemäß grundsätzlich jedwedes thermoplastische Kunststoffmaterial als Ausgangsmaterial bereitgestellt bzw. verwendet werden kann. Lediglich beispielhaft ist sonach zu verstehen, dass verfahrensgemäß vorexpandierte Polyolefin-basierte Kunststoffmaterialpartikel aus der Gruppe: Polypropylen, Polypropylen-Blend, Polyethylen, Polyethylen-Blend, Polyethylen-Polypropylen-Blends, Co-Polymere aus Ethylen und wenigstens einem anderen olefinischen Monomer, Co-polymer des Propylen and wenigstens einem anderen olefinischen Monomer und/oder Mischungen der Vorgenannten bereitgestellt bzw. verwendet wird. Es können sonach auch Blends bzw. Mischungen unterschiedlicher thermoplastischer Polyolefin-basierter Kunststoffmaterialien verwendet werden; lediglich beispielhaft sei in diesem Zusammenhang modifiziertes Polyolefin (mPO) genannt.

Sofern Polyolefin-basierte Blends verwendet werden, welche wenigstens zwei sich in wenigstens einem chemischen und/oder physikalischen Parameter und/oder die Molekülkonfiguration betreffenden Parameter unterscheidende (po-Iy)olefinischen Bestandteile enthalten, können diese grundsätzlich in jeden beliebigen anteilsmäßigen Zusammensetzungen, wobei sich die jeweiligen Anteile prozentual zu 100 % addieren, vorliegen. Entsprechend kann ein erster Bestandteil einen beliebigen gewichtsmäßigen Anteil zwischen 1 und 99 Gew.-% und ein zweiter Bestandteil einen beliebigen gewichtsmäßigen Anteil zwischen 99 und 1 Gew.-% aufweisen, wobei sich die jeweiligen Anteile zu 100 Gew.-% addieren. Selbstverständlich sind auch Anteile unterhalb 1 Gew.-% und oberhalb 99 Gew.-% denkbar.

Beispielsweise kann ein Co-Polymer aus Propylen und wenigstens einem anderen olefinischen Bestandteil verwendet werden, wobei der Anteil des wenigstens einen olefinischen Monomers in einem Bereich zwischen 0,5 und 50 Gew.-%, insbesondere einem Bereich zwischen 1 und 10 Gew.-%, liegt. Bei einem entsprechenden olefinischen Monomer kann es sich neben Ethylen/Propylen auch um Buten, Hexen, Octen, etc. handeln. Analoges gilt für ein Co-Polymer aus Ethylen und wenigstens einem anderen olefinischen Bestandteil.

Entsprechende Co-Polymere können eine Schmelztemperatur in einem Bereich zwischen 100 und 140°C, insbesondere zwischen 120 und 140°C, weiter insbesondere oberhalb 140°C aufweisen.

Ebenso können Mischungen wenigstens zweier unterschiedlicher Co-Polymere verwendet werden Lediglich beispielhaft sei auf eine Mischung aus einem ersten Co-Polymer aus Propylen und wenigstens einem olefinischen Bestandteil mit einer Schmelztemperatur oberhalb 140°C (Co-Polymer A) und einem anderen Co-Polymer aus Propylen und wenigstens einem olefinischen Bestandteil mit einer Schmelztemperatur zwischen 120 und 140°C (Co-Polymer B) verwiesen. Der Anteil des Co-Polymers B kann bezogen auf die Gesamtmischung in einem Bereich zwischen 0,1 und 50 Gew.-%, insbesondere in einem Bereich zwischen 0,1 und 25 Gew.-%, liegen. Der Anteil des Co-Polymers A ist entsprechend, sodass sich die Anteile zu 100 Gew.-% addieren.

Sämtliche verwendeten Kunststoffmaterialien können, wie erwähnt, mit einem oder mehreren Zusätzen, wie z. B. Fasern, versehen sein. Sämtliche verwendeten Kunststoffmaterialien können Rezyklate sein bzw. einen Anteil an Rezyklaten enthalten.

Es wurde erwähnt, dass die Eigenschaften der verfahrensgemäß herstellbaren bzw. hergestellten zellulären Kunststoffpartikel geringerer Dichte insbesondere durch die Prozessbedingungen während des Beladevorgangs und des Expansionsvorgangs beeinflussbar sind.

Verfahrensgemäß können sonach je nach den gewählten Prozessbedingungen z. B. zelluläre Kunststoffpartikel mit einer gleichmäßig oder ungleichmäßig verteilten zellularen Struktur hergestellt werden. Die Eigenschaften, d. h. insbesondere die Verteilung der zellulären Struktur, innerhalb jeweiliger zellulärer Kunststoffpartikel lässt sich sonach neben materialspezifischen Parametern (auch) durch Druck, Temperatur und Zeit während des Beladens bzw. Expandierens sowie durch die Förder- bzw. Verweilzeiten bzw. -bedingungen zwischen den einzelnen Verfahrensschritten beeinflussen.

Sofern verfahrensgemäß zelluläre Kunststoffpartikel mit einer ungleichmäßig verteilten zellularen Struktur hergestellt werden, können jeweilige zelluläre Kunststoffpartikel in einem Randbereich eine andere Anzahl, Form und/oder Größe an Zellen als in einem Kernbereich aufweisen. Mithin sind gradierte zelluläre Kunststoffpartikel herstellbar, welche aufgrund der unterschiedlichen Verteilung an Zellanzahl, Zellform und/oder Zellgröße ein besonderes Eigenschaftsspektrum aufweisen. Gradierte zelluläre Kunststoffpartikel können sonach, etwa nach Art von Core-Shell-Partikeln, in einem (äußeren) Randbereich andere zelluläre Eigenschaften aufweisen als in einem (inneren) Kernbereich.

Entsprechend konfigurierte zelluläre Kunststoffpartikel können insbesondere über eine (zu) kurze Beladung des kompakten Ausgangsmaterial mit Treibmittel erreicht werden, welches sich sodann nur randnah anlagert, sodass im Weiteren insbesondere randseitig eine Expansion erfolgt. Umgekehrt kann eine (zu) lange Auslagerung zwischen Treibmittelbeladung und Expansion zu zellulären Kunststoffpartikeln führen, bei welchen überwiegend der "Kern" geschäumt ist.

Im Allgemeinen gilt, dass verfahrensgemäß insbesondere zelluläre Kunststoffpartikel mit einer Zellgröße in einem Bereich zwischen 0,5 und 250 µm hergestellt werden können. Die tatsächliche Zellgröße - selbstverständlich ist hier typischerweise ein Durchschnitt angesprochen - kann sonach verfahrensgemäß je nach den gewählten Prozessbedingungen über einen sehr weiten Bereich und somit maßgeschneidert eingestellt werden. Entsprechendes gilt für eine etwaige Verteilung der Zellgröße innerhalb jeweiliger zellulärer Kunststoffpartikel.

Im Allgemeinen gilt ferner, dass, insbesondere je nach Expansionsgrad und gegebenenfalls Füllstoffanteil, verfahrensgemäß zelluläre Kunststoffpartikel mit einer Schüttdichte in einem Bereich zwischen 5 und 1000 g/l hergestellt werden können. Die tatsächliche Schüttdichte - selbstverständlich ist auch hier typischerweise ein Durchschnitt angesprochen - kann sonach je nach den gewählten Prozessbedingungen über einen sehr weiten Bereich und somit maßgeschneidert eingestellt werden.

Nachfolgend wird rein beispielhaft ein im Rahmen des Verfahrens konkret verarbeitbare bzw. verarbeitete vorexpandiertes Kunststoffmaterialpartikel sowie zugehörige Parameter zur Durchführung des zweiten und dritten Schritts des Verfahrens aufgeführt:
Im Rahmen des Beispiels wurde(n) in dem ersten Schritt des Verfahrens ein vorexpandiertes expandierbares Polypropylen-Kunststoffmaterial, mithin Kunststoffmaterialpartikel aus Polypropylen, mit einer Schüttdichte von ca. 75 g/l bereitgestellt. Die vorexpandierten Kunststoffmaterialpartikel wurden ohne gesonderte Temperierung in dem zweiten Schritt des Verfahrens in einem Druckbehälter bei einem Druck von ca. 8 bar für eine Zeitdauer von 100 h mit Luft als Treibmittel beladen. Die Druckanstiegsgeschwindigkeit lag bei ca. 0,2 bar pro Stunde. In dem dritten Schritt des Verfahrens erfolgte ein Expandieren der mit Treibmittel beladenen Kunststoffmaterialpartikel durch, insbesondere kontinuierliches oder diskontinuierliches, Fördern der mit Treibmittel beladenden vorexpandierten Kunststoffmaterialpartikel durch einen mehrere Infrarot-Strahler umfassenden Infrarot-Durchlaufofen, mithin durch Fördern der Kunststoffmaterialpartikel entlang einer durch eine Mehrzahl an Temperierelementen in Form von InfrarotStrahlern mit einer Strahlergesamtleistung von ca. 20 kW gebildeten Förder- bzw. Temperierstrecke einer Länge von ca. 5 m. Die Temperatur des Förderbands am Eingang der Förderstrecke lag bei ca. 85°C, die Temperatur des Förderbands am Ausgang der Förder- bzw. Temperierstrecke lag bei ca. 160°C. Die Fördergeschwindigkeit betrug ca. 450 mm/s. Die derart hergestellten zellulären Kunststoffpartikel wiesen eine Schüttdichte von ca. 35 g/l auf.

Ein zweiter Aspekt der Offenbarung betritt ein Verfahren zur Verarbeitung eines Kunststoffpartikelmaterials, welches durch zelluläre Kunststoffpartikel, welche gemäß dem Verfahren nach dem ersten Aspekt hergestellt wurden, gebildet ist oder solche enthält bzw. umfasst, zur Herstellung eines Partikelschaumformteils.

Ein dritter Aspekt der Erfindung betrifft eine Vorrichtung zur Herstellung von zellulären Kunststoffpartikeln gemäß einem Verfahren nach dem ersten Aspekt, umfassend:
- eine erste Einrichtung, welche zum Beladen der vorexpandierten thermoplastischen mit einem Treibmittel unter Einfluss von Druck eingerichtet ist, wobei die Einrichtung insbesondere eine Beladungseinrichtung, z. B. in Form einer Druckbehältereinrichtung, umfasst; und
- eine zweite Einrichtung, welche zum Expandieren des Treibmittels zur Herstellung zellulärer Kunststoffpartikel unter Einfluss von Temperatur eingerichtet ist, wobei die zweite Einrichtung eine Strahlungserzeugungseinrichtung zur Erzeugung von Infrarot-Strahlung umfasst, wobei die Strahlungserzeugungseinrichtung als Infrarot-Durchlaufofen eingereichtet ist.

Die zweite Einrichtung kann eine Fördereinrichtung, insbesondere eine kombinierte Förder- und Temperiereinrichtung, umfassen. Eine entsprechende kombinierte Förder- und Temperiereinrichtung ist als ein einen oder mehrere Infrarot-Strahler umfassender Infrarot-Durchlaufofen ausgebildet bzw. umfasst einen solchen.

Der zweiten Einrichtung kann ferner eine Entspannungseinrichtung, wie z. B. einen Entspannungsraum, in welchem die hergestellten zellulären Kunststoffpartikel unter definierten chemischen und/oder physikalischen Bedingungen, d. h. insbesondere definierten Temperaturverhältnisses, für eine definierte Zeit ausgelagert (entspannt) werden, zugeordnet sein bzw. werden. Eine entsprechende Entspannungseinrichtung kann z. B. als eine Dekompressionseinrichtung ausgebildet sein oder eine solche umfassen.

Es ist denkbar, dass die Vorrichtung ferner die bzw. eine Fördereinrichtung umfasst, vermittels welcher die hergestellten zellulären Kunststoffpartikel kontinuierlich oder diskontinuierlich durch einen entsprechenden Entspannungsraum gefördert werden.

Die Vorrichtung kann ferner geeignete Handlingeinrichtungen zum Handling der vorexpandierten Kunststoffmaterialpartikel zu deren Bereitstellung und/oder zur Entnahme der hergestellten zellulären Kunststoffpartikel umfasst. Entsprechende Handlingeinrichtungen können ebenso als Fördereinrichtungen ausgebildet sein bzw. solche umfassen. Insbesondere kommen zur Förderung von Schüttgut geeignete Fördereinrichtungen, wie z. B. pneumatische Fördereinrichtungen, welche zur Ausbildung einer Förderströmung eingerichtet sind, in Betracht.

Die Vorrichtung kann grundsätzlich eine Fördereinrichtung umfassen, vermittels welcher die vorexpandierten Kunststoffmaterialpartikel bzw. im Weiteren die zellulären Kunststoffpartikel kontinuierlich oder diskontinuierlich durch die einzelnen Einrichtungen der Vorrichtung gefördert werden können.

Sämtliche Ausführungen im Zusammenhang mit dem Verfahren nach dem ersten Aspekt gelten analog für das das Verfahren nach dem zweiten Aspekt und die Vorrichtung nach dem drittten Aspekt.

Die Erfindung ist im Weiteren anhand von Ausführungsbeispielen unter Bezugnahme auf die Fig. nochmals beispielhaft erläutert. Dabei zeigt:
Fig. 1 ein Flussdiagramm zur Veranschaulichung eines Verfahrens gemäß einem Ausführungsbeispiel;
Fig. 2 eine Prinzipdarstellung einer Vorrichtung zur Durchführung eines Verfahrens gemäß einem Ausführungsbeispiel; und
Fig. 3, 4 je eine Prinzipdarstellung eines verfahrensgemäß hergestellten zellulären Kunststoffpartikels gemäß einem Ausführungsbeispiel.

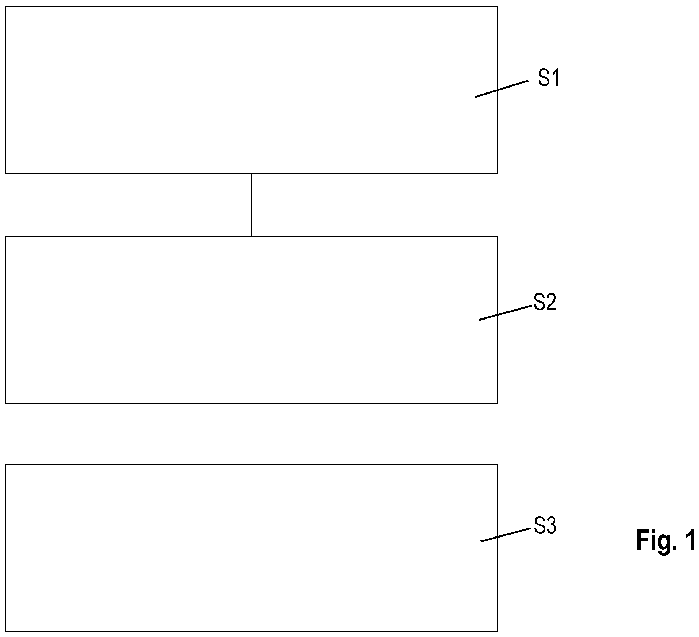

Fig. 1 zeigt ein Flussdiagramm zur Veranschaulichung eines Verfahrens gemäß einem Ausführungsbeispiel.

Das Verfahren ist ein Verfahren zur Herstellung zellulärer Kunststoffpartikel; das Verfahren dient sonach zur Herstellung zellulärer Kunststoffpartikel. Bei den verfahrensgemäß herstellbaren bzw. hergestellten Kunststoffpartikeln mit im Vergleich zu dem Ausgangsmaterial geringerer Dichte handelt es sich sonach um Kunststoffpartikel, welche zumindest abschnittsweise, gegebenenfalls vollständig, eine zelluläre Struktur aufweisen. Die Kunststoffpartikel können zudem, insbesondere aufgrund eines bestimmten Gehalts an Treibmittel - sei es ein Rest aus dem beschriebenen Verfahren oder ein nachträglich in einem separaten Prozessschritt eingebracht -, ein gewisses (weiteres) Expansionsvermögen aufweisen. Die verfahrensgemäß herstellbaren bzw. hergestellten zellulären Kunststoffpartikel Dichte können sonach expandierbar und/oder (mechanisch) komprimierbar bzw. kompressibel sein.

Die verfahrensgemäß herstellbaren bzw. hergestellten zellulären Kunststoffpartikel mit geringerer Dichte lassen sich in einem oder mehreren eigenständigen Folgeprozessen zu einem Partikelschaumformteil weiterverarbeiten. Die Weiterverarbeitung der Kunststoffpartikel zu einem Partikelschaumformteil kann unter Einsatz von Dampf bzw. Heißdampf (dampfbasiert) oder ohne Einsatz von Dampf bzw. Heißdampf (nicht-dampfbasiert bzw. trocken) erfolgen.

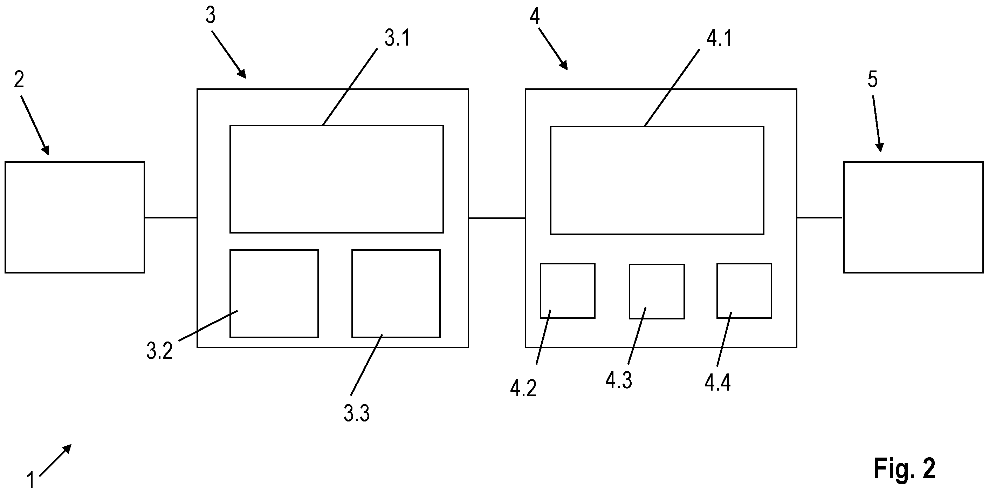

Die Schritte des Verfahrens zur Herstellung zellulärer Kunststoffpartikel Dichte werden im Weiteren unter Bezugnahme auf die Fig. 1 und 2 näher erläutert.

In einem ersten Schritt S1 des Verfahrens erfolgt ein Bereitstellen eines Kunststoffmaterials in Form von vorexpandierten Kunststoffmaterialpartikeln. Die bereitgestellten vorexpandierten Kunststoffmaterialpartikel können gegebenenfalls auch als "vorexpandierte Kunststoffpartikel" bezeichnet werden. Die als Ausgangsmaterial zu erachtenden vorexpandierten Kunststoffmaterialpartikel, bei welchen es sich typischerweise um thermoplastische Kunststoffmaterialpartikel handelt, werden sonach in dem ersten Schritt des Verfahrens bereitgestellt. Das bereitgestellte Ausgangsmaterial liegt somit partikulär, d. h. insbesondere schüttgutartig bzw. -förmig, vor. In dem ersten Schritt wird sonach im Allgemeinen wenigstens eine Maßnahme zum Bereitstellen eines partikulären, d. h. insbesondere schüttgutartigen bzw. -förmigen, (thermoplastischen) Kunststoffmaterials in Form entsprechender vorexpandierter Kunststoffmaterialpartikel durchgeführt. Die Dichte der in dem ersten Schritt des Verfahrens bereitgestellten vorexpandierten Kunststoffmaterialpartikel liegt je nach Materialzusammensetzung bzw. - modifikation aufgrund der zellulären Struktur typischerweise unterhalb 1 g/cm³, insbesondere in einem Bereich zwischen 0,05 und 1,5 g/cm³, woraus sich die vorexpandierten Eigenschaften der bereitgestellten vorexpandierten Kunststoffmaterialpartikel ergeben; die Matrix der bereitgestellten vorexpandierten Kunststoffmaterialpartikel weist sonach eine poröse bzw. zelluläre Struktur auf.

Die Matrix der vorexpandierten Kunststoffmaterialpartikel kann trotz ihrer zellulären Struktur gegebenenfalls wenigstens ein(en) Zusatzstoff bzw. -material, wie z. B. längliche, kugelige oder plättchenförmige Füllstoffe, enthalten. Insbesondere für vorexpandierte Kunststoffmaterialpartikel mit Zusatzstoffen bzw. -materialien kann die Dichte konzentrationsabhängig gegebenenfalls auch oberhalb von 1 g/cm³ liegen. Entsprechende Zusatzstoffe bzw. -materialien können gegebenenfalls selbst zellulär vorliegen bzw. wirken.

Der erste Schritt S1 des Verfahrens kann, gegebenenfalls zumindest teilautomatisierbar oder teilautomatisiert, vermittels einer in Fig. 2 rein schematisch dargestellten Bereitstellungseinrichtung 2, welche zum kontinuierlichen oder diskontinuierlichen Bereitstellen entsprechender vorexpandierter Kunststoffmaterialpartikel eingerichtet ist, ausgeführt werden. Eine entsprechende Bereitstellungseinrichtung 2 kann z. B. eine Fördereinrichtung sein, vermittels welcher sich die zu entsprechenden zellulären Kunststoffpartikeln zu verarbeitenden vorexpandierten Kunststoffmaterialpartikel zu einer bzw. in eine den zweiten Schritt des Verfahrens ausführende(n) Beladungseinrichtung 3 fördern lässt. Eine entsprechende Fördereinrichtung kann z. B. als Bandfördereinrichtung oder Strömungsfördereinrichtung ausgebildet sein oder eine solche umfassen. Die Förderung der vorexpandierten Kunststoffmaterialpartikel zu einer bzw. in eine den zweiten Schritt des Verfahrens ausführende(n) Beladungseinrichtung 3 kann sonach ein Aufnehmen der vorexpandierten Kunststoffmaterialpartikel in eine Förderströmung beinhalten; die vorexpandierten Kunststoffmaterialpartikel können sonach vermittels einer Förderströmung zu einer bzw. in eine den zweiten Schritt des Verfahrens ausführende(n) Beladungseinrichtung 3 gefördert werden.

In einem zweiten Schritt S2 des Verfahrens erfolgt ein Beladen der vorexpandierten Kunststoffmaterialpartikel mit einem Treibmittel zumindest unter Einfluss von Druck. Die vorexpandierten Kunststoffmaterialpartikel werden in dem zweiten Schritt sonach zumindest unter Einfluss von Druck - gegebenenfalls kann materialabhängig neben einem bestimmten Druck auch eine bestimmte (erhöhte) Temperatur angewendet werden - mit einem Treibmittel beladen. In dem zweiten Schritt wird sonach im Allgemeinen wenigstens eine Maßnahme zum Beladen der vorexpandierten Kunststoffmaterialpartikel mit einem Treibmittel zumindest unter Einfluss von Druck, mithin zumindest druckbeaufschlagt, durchgeführt. Phänomenologisch erfolgt in dem zweiten Schritt des Verfahrens typischerweise eine Anreicherung des Treibmittels in den jeweiligen vorexpandierten Kunststoffmaterialpartikeln. Die Anreicherung des Treibmittels in den jeweiligen vorexpandierten Kunststoffmaterialpartikeln kann, insbesondere abhängig von der chemischen Konfiguration der vorexpandierten Kunststoffmaterialpartikel, des Treibmittels sowie der darin gegebenenfalls enthaltenen Zusatzstoffe bzw. - materialien sowie abhängig von den, wie erwähnt, typischerweise ebenso materialabhängig gewählten Druck- bzw. Temperaturbedingungen, beispielsweise aus bzw. durch Absorptions- und/oder Lösungsprozessen des Treibmittels in den jeweiligen vorexpandierten Kunststoffmaterialpartikeln resultieren. Aufgrund der zellulären Struktur der vorexpandierten Kunststoffmaterialpartikel kann eine Anreicherung bzw. Ansammlung des Treibmittels auch innerhalb der durch die zelluläre Struktur gegebenen Zellräume erfolgen; mithin kann das durch die Zellräume definierte innere Volumen eines jeweiligen vorexpandierten Kunststoffmaterial als Aufnahmeraum für die in dem zweiten Schritt des Verfahrens erfolgende Aufnahme von Treibmittel genutzt werden.

Das Druckniveau und die Druckanstiegsgeschwindigkeit in dem zweiten Schritt des Verfahrens sind dabei, insbesondere materialabhängig, typischerweise so gewählt, dass die zelluläre Struktur der vorexpandierten Kunststoffmaterialpartikel nicht geschädigt wird; insbesondere sind Druckniveau und Druckanstiegsgeschwindigkeit in dem zweiten Schritt des Verfahrens so gewählt, dass sich die zelluläre Struktur der vorexpandierten Kunststoffmaterialpartikel druckbedingt (wirksame Differenz zwischen äußerem Beladungs- und innerzellulärem Druck) nicht plastisch verformt und sogar kollabiert.

Als Treibmittel können Gase, wie z. B. Kohlendioxid oder ein Kohlendioxid und/oder Stickstoff enthaltendes Gemisch, wie z. B. Luft, verwendet werden. Im Allgemeinen können jedwede brennbare oder nicht-brennbare organische Gase, d. h. insbesondere Butan oder Pentan; oder Inertgase, wie z. B. Edelgase d. h. insbesondere Helium, Neon, Argon; oder Stickstoff, oder Gemische hiervon verwendet werden. Der Begriff "Treibmittel" kann sonach auch ein Gemisch chemisch und/oder physikalisch verschiedener Treibmittel umfassen. Die Auswahl des Treibmittels erfolgt typischerweise unter Berücksichtigung dessen Aufnahmefähigkeit in den vorexpandierten Kunststoffmaterialpartikeln, mithin unter Berücksichtigung der chemischen und/oder physikalischen Konfiguration bzw. Zusammensetzung der vorexpandierten Kunststoffmaterialpartikel. Sofern die vorexpandierten Kunststoffmaterialpartikel Zusatzstoffe bzw. -materialen enthalten, können die Eigenschaften, wie z. B. die chemische und/oder physikalische Konfiguration der Zusatzstoffe bzw. -materialen bei der Auswahl des Treibmittels ebenso berücksichtigt werden.

Der zweite Schritt S2 des Verfahrens kann, gegebenenfalls zumindest teilautomatisierbar oder teilautomatisiert, kann vermittels einer in Fig. 2 rein schematisch dargestellten Beladungseinrichtung 3, welche zum Beladen der vorexpandierten Kunststoffmaterialpartikel mit einem Treibmittel zumindest unter Einfluss von Druck respektive zum Durchführen eines entsprechenden Beladungsvorgangs eingerichtet ist, ausgeführt werden. Eine entsprechende Beladungseinrichtung 3 kann z. B. als Autoklaveinrichtung, d. h. im Allgemeinen als eine einen Druck- bzw. Prozessraum umfassende Druckbehältereinrichtung 3.1, ausgebildet sein bzw. eine solche umfassen. Eine entsprechende Beladungseinrichtung 3 kann ferner eine Temperiereinrichtung 3.2, welche zum Temperieren eines entsprechenden Druck- bzw. Prozessraums eingerichtet ist, aufweisen. Eine entsprechende Beladungseinrichtung kann in allen Fällen eine hardware- und/oder softwaremäßig implementierten Steuerungs- und/oder Regelungseinheit 3.3 aufweisen, welche zur Steuerung und/oder Regelung, d. h. im Allgemeinen zur Einstellung, bestimmter dynamischer und/oder statischer Druck- und/oder Temperaturparameter innerhalb des Druck- bzw. Prozessraums eingerichtet ist.

In einem dritten Schritt des Verfahrens erfolgt ein Expandieren der mit Treibmittel beladenen vorexpandierten Kunststoffmaterialpartikel zur Herstellung zellulärer Kunststoffpartikel unter Einfluss von Temperatur, d. h. insbesondere erhöhter Temperatur. Die mit Treibmittel beladenen vorexpandierten Kunststoffmaterialpartikel werden in dem dritten Schritt des Verfahrens sonach typischerweise (erhöhter Temperatur, d. h. im Allgemeinen thermischer Energie, ausgesetzt, was zu einem Ausgasen und/oder Expandieren des in den vorexpandierten Kunststoffmaterialpartikeln enthaltenen Treibmittels führt. Insbesondere bedingt das Ausgasen des Treibmittels in den Zellen und den Matrixbereichen der thermisch bedingt erweichenden bzw. erweichten vorexpandierten Kunststoffmaterialpartikeln ein erneutes bzw. weiteres Expandieren der Kunststoffmaterialpartikel, was nach Abkühlen bzw. "Einfrieren" zur Ausbildung von Kunststoffpartikeln mit einer, gegebenenfalls gegenüber dem Ausgangsmaterial, etwa im Hinblick auf Zellanzahl, Zellform und/oder Zellgröße veränderten, dauerhaften zellulären Struktur und somit zur Ausbildung der herzustellenden zellulären Kunststoffpartikel führt. In dem dritten Schritt des Verfahrens wird sonach im Allgemeinen wenigstens eine Maßnahme zum Ausgasen bzw. Expandieren des in den zumindest durch Einfluss von Temperatur und somit zumindest thermisch bedingt erweichenden bzw. erweichten vorexpandierten Kunststoffmaterialpartikeln enthaltenen Treibmittels zur Herstellung zellulärer Kunststoffpartikel durchgeführt. Phänomenologisch erfolgen in dem dritten Schritt des Verfahrens, insbesondere aufgrund des Ausgasens bzw. der Desorption des Treibmittels aus den Zellen und den Matrixbereichen der erweichenden bzw. erweichten vorexpandierten Kunststoffmaterialpartikeln, ein, gegebenenfalls weiteres, Zellwachstum sowie gegebenenfalls eine erneute Zellbildung mit nachfolgendem Zellwachstum innerhalb der vorexpandierten Kunststoffmaterialpartikel, welches zu den herzustellenden zellulären Kunststoffpartikeln führt. Die Zellbildung, sofern eine solche erfolgt, basiert dabei typischerweise auf der erwähnten Desorption des Treibmittels an Nukleierungspunkten in den durch Temperatureinfluss erweichenden bzw. erweichten Kunststoffmaterialpartikeln, während das Zellwachstum typischerweise auf einer überdruckbedingten Expansion des Treibmittels in bereits gebildeten bzw. vorhandenen Zellen basiert. Wie ebenso erwähnt, wird die derart gebildete zelluläre Struktur bzw. der damit realisierte weitere Expansionszustand durch die bzw. eine Temperaturabsenkung der sonach hergestellten zellulären Kunststoffpartikeln, also durch deren Abkühlung, z. B. an der Umgebung, dauerhaft "eingefroren" bzw. fixiert.

Grundsätzlich gilt sonach, dass nach Abschluss der in dem zweiten Schritt des Verfahrens erfolgenden Druckbeaufschlagung, d. h. bei einem Druckabfall, insbesondere auf Normal- bzw. Standardbedingungen, Ausgas- bzw. Desorptionsprozesse innerhalb jeweiliger mit Treibmittel beladender und typischerweise thermisch bedingt erweichter vorexpandierter Kunststoffmaterialpartikel erfolgen. Die Ausgas- bzw. Desorptionsprozesse des Treibmittels stellen eine wesentliche Voraussetzung für die für die Herstellung zellulärer Kunststoffpartikel erforderlichen Zellwachstumsprozesse und gegebenenfalls Zellbildungsprozesse innerhalb jeweiliger Kunststoffmaterialpartikel dar. Aus den nach dem zweiten Schritt des Verfahrens vorliegenden, mit Treibmittel beladenen und typischerweise thermisch bedingt erweichten vorexpandierten Kunststoffmaterialpartikeln, werden in dem dritten Schritt des Verfahrens, insbesondere bedingt durch entsprechende Ausgas- bzw. Desorptionsprozesse, die verfahrensgemäß herzustellenden zellulären Kunststoffpartikel gebildet. Wie im Weiteren erläutert wird, können durch Steuerung entsprechender ausgas- bzw. desorptionsbedingt erfolgender Zellbildungs- und Zellwachstumsprozesse gegebenenfalls zelluläre Strukturen mit lokal unterschiedlichen Zelleigenschaften und somit gradierte zelluläre Kunststoffpartikel realisiert werden.

Die Nukleierung in Verbindung mit einer gezielten Einstellung des Erweichungsverhaltens hat einen entscheidenden Einfluss auf die Desorption des Treibmittels. Insbesondere ist durch eine Vielzahl an einzelnen Nukleierungspunkten eine Vielzahl an neuen kleinen Zellen ausbildbar, was zu einer feinen Zellstruktur innerhalb jeweiliger zellulärer Kunststoffpartikel führt. Eine entsprechende feine Zellstruktur zeichnet sich insbesondere durch kleine Zellen und eine weitgehend homogene Verteilung dieser innerhalb jeweiliger zellulärer Kunststoffpartikel aus. Im Allgemeinen gilt, dass verfahrensgemäß insbesondere zelluläre Kunststoffpartikel mit einer Zellgröße in einem Bereich zwischen 0,5 und 250 µm hergestellt werden können. Die tatsächliche Zellgröße - selbstverständlich ist hier typischerweise ein Durchschnitt angesprochen - kann sonach verfahrensgemäß je nach den gewählten Prozessbedingungen über einen sehr weiten Bereich und somit maßgeschneidert eingestellt werden. Entsprechendes gilt für eine etwaige Verteilung der Zellgrößen innerhalb jeweiliger zellulärer Kunststoffpartikel.

Insbesondere gilt, dass sich mit dem Verfahren zelluläre Kunststoffpartikel mit einer (mittleren) Zellgröße unterhalb 100 µm, insbesondere unterhalb 75 µm, weiter insbesondere unterhalb 50 µm, weiter insbesondere unterhalb 25 µm, ausbilden lassen.

Der dritte Schritt S3 des Verfahrens kann, gegebenenfalls zumindest teilautomatisierbar oder teilautomatisiert, vermittels einer Expansionseinrichtung 4, welche zum strahlungsbasierten Expandieren des Treibmittels zur Herstellung zellulärer Kunststoffpartikel zumindest unter Einfluss von Temperatur zum Durchführen eines entsprechenden strahlungsbasierten Expansionsvorgangs eingerichtet ist, ausgeführt werden. Eine entsprechende Expansionseinrichtung 4 ist sonach typischerweise als strahlungsbasierte Heizeinrichtung, d. h. im Allgemeinen als eine einen zumindest strahlungsbasiert temperierbaren bzw. temperierten Temperier- bzw. Prozessraum umfassende Temperiereinrichtung 4.1, ausgebildet sein bzw. eine solche umfassen. Eine entsprechende Temperiereinrichtung 4.1 kann ferner eine Fördereinrichtung 4.3, welche zum Fördern der zu expandierenden Kunststoffmaterialpartikel entlang einer Förderstrecke durch einen entsprechenden Temperier- bzw. Prozessraum eingerichtet ist, aufweisen. Eine entsprechende Expansionseinrichtung 4 kann in allen Fällen eine hardware- und/oder softwaremäßig implementierte Steuerungs- und/oder Regelungseinheit 4.2 aufweisen, welche zur Steuerung und/oder Regelung, d. h. im Allgemeinen zur Einstellung, bestimmter dynamischer und/oder statischer Förder- und/oder Temperaturparameter innerhalb eines entsprechenden Temperier- bzw. Prozessraums eingerichtet ist.

Die Dichte der in dem dritten Schritt S3 des Verfahrens hergestellten zellulären Kunststoffpartikel liegt typischerweise deutlich unterhalb der Ausgangsdichte der in dem ersten Schritt S1 bereitgestellten vorexpandierten Kunststoffmaterialpartikel, woraus sich die zellulären Eigenschaften der verfahrensgemäß herstellbaren bzw. hergestellten Kunststoffpartikel ergeben. Die Schüttdichte der in dem dritten Schritt S3 des Verfahrens hergestellten zellulären Kunststoffpartikel liegt entsprechend deutlichunterhalb der Schüttdichte der in dem ersten Schritt S1 des Verfahrens bereitgestellten vorexpandierten Kunststoffmaterialpartikel.

Die in dem dritten Schritt S3 des Verfahrens hergestellten zellulären Kunststoffpartikel können, wie weiter oben erwähnt, (weiter) expandierbar sein; dies kann eine wesentliche Eigenschaft für die beschriebene, insbesondere dampfbasierte oder nicht-dampfbasierte, Weiterverarbeitung der zellulären Kunststoffpartikel zur Herstellung von Partikelschaumformteilen darstellen.

Wie angedeutet, kann das Beladen der vorexpandierten Kunststoffmaterialpartikel mit einem Treibmittel unter Einfluss von Druck und Temperatur durchgeführt werden. Die sonach zum Beladen der vorexpandierten Kunststoffmaterialpartikel mit Treibmittel sowie im Weiteren zur gezielten Einstellung bestimmter Eigenschaften der herzustellenden bzw. hergestellten zellulären Kunststoffpartikel, insbesondere materialabhängig, variierbaren Parameter sind sonach zunächst die in dem zweiten Schritt S2 des Verfahrens herrschenden Druck- und Temperaturverhältnisse. Selbstverständlich ist auch die Zeit, d. h. insbesondere der Verlauf und die Dauer der Druck- und Temperaturverhältnisse in dem zweiten Schritt des Verfahrens, ein Parameter, welcher einen Einfluss auf das Beladen der vorexpandierten Kunststoffmaterialpartikel mit Treibmittel, d. h. insbesondere das Aufnehmen bzw. Anreichern des Treibmittels in den vorexpandierten Kunststoffmaterialpartikeln, hat.

Das Beladen der vorexpandierten Kunststoffmaterialpartikel mit dem bzw. einem Treibmittel kann z. B., insbesondere in Abhängigkeit der chemischen Zusammensetzung der vorexpandierten Kunststoffmaterialpartikel und/oder des Treibmittels, z. B. bei einem Druck in einem Bereich zwischen 1 und 200 bar, durchgeführt werden. Der Druck bezieht sich insbesondere auf den Druck innerhalb eines Druck- bzw. Prozessraums einer entsprechenden Beladungseinrichtung 3 während der Ausführung des zweiten Schritts S2 des Verfahrens.

Das Beladen der vorexpandierten Kunststoffmaterialpartikel mit dem bzw. einem Treibmittel kann z. B., insbesondere in Abhängigkeit der chemischen Zusammensetzung der vorexpandierten Kunststoffmaterialpartikel und/oder des Treibmittels, z. B. bei einer Temperatur in einem Bereich zwischen 0 und 250°C durchgeführt werden. Die Temperaturen beziehen sich insbesondere auf Temperaturen innerhalb eines Druck- bzw. Prozessraums einer entsprechenden Beladungseinrichtung während der Ausführung des zweiten Schritts S2 des Verfahrens.

Das Beladen der vorexpandierten Kunststoffmaterialpartikel mit dem bzw. einem Treibmittel kann z. B., insbesondere in Abhängigkeit der chemischen Zusammensetzung der vorexpandierten Kunststoffmaterialpartikel und/oder des Treibmittels, für eine Zeitdauer z. B. in einem Bereich zwischen 0,1 und 1000 h durchgeführt werden. Die vorstehend, wie erwähnt, beispielhaft genannten Zeitdauern beziehen sich insbesondere auf die Druck- bzw. Temperaturbeaufschlagung der Kunststoffmaterialpartikel innerhalb eines Druck- bzw. Prozessraums einer entsprechenden Beladungseinrichtung 2 während der Ausführung des zweiten Schritts S2 des Verfahrens.

Das Expandieren der mit Treibmittel beladenen Kunststoffmaterialpartikel zur Herstellung der zellulären Kunststoffpartikel unter Einfluss von Temperatur, insbesondere in Abhängigkeit der chemischen Zusammensetzung der mit Treibmittel beladenen Kunststoffpartikelmaterial und/oder des Treibmittels, kann z. B. bei Normaldruck, mithin einem Umgebungsdruck von ca. 1 bar, durchgeführt werden. Ein besonderes Druckniveau, wie z. B. ein Über- oder Unterdruckniveau, ist zum Expandieren der mit Treibmittel beladenen vorexpandierten Kunststoffmaterialpartikel zur Herstellung der zellulären Kunststoffpartikel sonach möglich, aber nicht zwingend erforderlich, was den Expansionsvorgang grundsätzlich vereinfacht.

Das Expandieren der mit Treibmittel beladenen Kunststoffmaterialpartikel zur Herstellung der zellulären Kunststoffpartikel unter Einfluss von Temperatur kann z. B., insbesondere in Abhängigkeit der chemischen Zusammensetzung des mit Treibmittel beladenen Kunststoffpartikelmaterials und/oder des Treibmittels, bei einer Temperatur z. B. in einem Bereich zwischen 0 und 300°C, durchgeführt werden. Die vorstehend genannten Temperaturen können sich insbesondere auf eine Eintrittstemperatur bei Eintritt der mit Treibmittel beladenen vorexpandierten Kunststoffmaterialpartikel in eine entsprechende Expansionseinrichtung 4 und/oder auf eine Austrittstemperatur bei Austritt der zellulären Kunststoffpartikel aus einer entsprechenden Expansionseinrichtung 4 beziehen. Entsprechende Eintritts- und Austrittstemperaturen können gleich, ähnlich oder verschieden sein. Sofern eine entsprechende Expansionseinrichtung 4 eine Fördereinrichtung 4.31 aufweist, welche eingerichtet ist, die mit Treibmittel beladenen Kunststoffmaterialpartikel entlang entsprechender Temperiereinrichtungen 4.1 zu befördern, können sich die vorgenannten Temperaturen auf eine Temperatur bei Eintritt des mit Treibmittel beladenen vorexpandierten Kunststoffpartikelmaterials in eine entsprechende Expansions- bzw. Temperiereinrichtung 4.1 (Eintrittstemperatur), mithin auf einen Anfangsbereich einer entsprechenden Fördereinrichtung 4.3, und/oder auf eine Austrittstemperatur bei Austritt der Kunststoffpartikel aus einer entsprechenden Expansions- bzw. Temperiereinrichtung 4 (Austrittstemperatur), mithin auf einen Endbereich einer entsprechenden Fördereinrichtung, beziehen. Typischerweise ist die Eintrittstemperatur geringer als die Austrittstemperatur.

Das Expandieren der mit Treibmittel beladenen vorexpandierten Kunststoffmaterialpartikel unter Einfluss von Temperatur erfolgt durch Bestrahlen der mit Treibmittel beladenen vorexpandierten Kunststoffpartikelmaterial mit Infrarot-Strahlung.

Die Temperierung, d. h. insbesondere das Beheizen, der mit Treibmittel beladenen vorexpandierten Kunststoffmaterialpartikel kann, insbesondere materialabhängig, durch eine Auswahl und/oder Einstellung der Eigenschaften energiereicher Strahlung, d. h. insbesondere deren Wellenlänge, sonach gezielt erfolgen, ohne bei einem mit einem Erwärmen der mit Treibmittel beladenen vorexpandierten Kunststoffmaterialpartikel einhergehenden Erweichen derselben ein für den Expansionsvorgang der mit Treibmittel beladenen Kunststoffmaterialpartikel unerwünschtes Auf- bzw. Durchschmelzen, also zu geringe Stabilitäten der erweichten Kunststoffmaterialpartikel, zu riskieren. Hierbei zeigte sich Infrarot-Strahlung in Untersuchungen als besonders geeignet, als diese eine gezielte und in Verbindung mit einer Fördereinrichtung sehr gut kontrollierbare Volumenerwärmung der mit Treibmittel beladenen vorexpandierten Kunststoffmaterialpartikel, einen kontrollierbaren Erweichungsvorgang und damit - dies ist für die Einstellung der Eigenschaften der herzustellenden zellulären Kunststoffpartikel wesentlich - einen kontrollierbaren Expansionsvorgang ermöglicht.

Das Expandieren der mit Treibmittel beladenen Kunststoffmaterialpartikel erfolgt unter Einfluss von Temperatur durch Bestrahlen der mit einem Treibmittel beladenen vorexpandierten Kunststoffmaterialpartikel mit energiereicher Wärmestrahlung, nämlich Infrarot-Strahlung, wobei die mit Treibmittel beladenen Kunststoffmaterialpartikel auf wenigstens einer durch eine Fördereinrichtung 4.3 definierten Förderstrecke, insbesondere kontinuierlich, entlang wenigstens einer entsprechende energiereiche Strahlung, d. h. Infrarot-Strahlung, erzeugenden Strahlungserzeugungseinrichtung 4.4 gefördert werden. Eine entsprechende Strahlungserzeugungseinrichtung 4.4 kann insbesondere als ein Infrarot-Ofen, insbesondere ein Infrarot-Durchlaufofen, ausgebildet sein oder einen solchen umfassen. Ein entsprechender Infrarot-Ofen kann ein oder mehrere entlang einer entsprechenden Förderstrecke angeordnete oder ausgebildete Infrarot-Strahler umfassen. Entsprechende Infrarot-Strahler können beispielsweise eine, gegebenenfalls variable, Abstrahlleistung in einem Bereich zwischen 1 und 500 kW aufweisen. Die vorstehend genannten Leistungen können sich insbesondere auf Flächenleistung pro m² beziehen. Insbesondere können Flächenleistungen zwischen 5 und 100 kW/m² verwendet werden. Durch variable Strahler bzw. variable Strahler(flächen)leistungen können unterschiedliche Temperaturzonen erzeugt werden, wodurch ebenso ein Parameter zur Beeinflussung des Expansionsvorgangs gegeben ist.

Verfahrensgemäß kann nach dem Expandieren der mit Treibmittel beladenen Kunststoffmaterialpartikel zur Herstellung der zellulären Kunststoffpartikel unter Einfluss von (insbesondere im Vergleich zu dem vorher erfolgten Expansionsvorgang erniedrigter) Temperatur, wie weiter oben angedeutet, ein Abkühlen der hergestellten zellulären Kunststoffpartikel durchgeführt werden. Durch das, zweckmäßig rasch, erfolgende Abkühlen kann ein "Einfrieren" der nach dem Expansionsvorgang vorliegenden zellulären Struktur der zellulären Kunststoffpartikel erfolgen. Derart kann eine nach dem Expansionsvorgang gegebenenfalls unerwünschte weitere, integrale oder auch nur lokale Expansion der Kunststoffpartikel gezielt unterbunden werden, etwa um eine nach dem Expansionsvorgang gegebenenfalls gewünschte zelluläre Struktur der Kunststoffpartikel beizubehalten. Das Abkühlen kann insbesondere von einer oberhalb einer Referenztemperatur, insbesondere kann Raumtemperatur als Referenztemperatur verwendet werden, liegenden Prozesstemperatur auf eine unterhalb der Prozess- bzw. Referenztemperatur liegende Abkühltemperatur, insbesondere Raumtemperatur, erfolgen. Mithin sind gesonderte Temperiereinrichtungen zum Abkühlen der Kunststoffpartikel nicht zwingend erforderlich, sondern es kann genügen, wenn die Kunststoffpartikel nach dem Expansionsvorgang auf Raumtemperatur abgekühlt bzw. bei Raumtemperatur ausgelagert werden.

Verfahrensgemäß kann, wie ebenso weiter oben angedeutet, ein wenigstens einen, insbesondere funktionalen, Zusatzstoff bzw. -material, beispielsweise einen Faserstoff bzw. -material und/oder einen Farbstoff bzw. -material und/oder einen Nukleierungsstoff bzw. -material und/oder einen Stoff bzw. ein Material zur gezielten Beeinflussung bzw. Steuerung des Erweichungsverhaltens der mit Treibmittel beladenen Kunststoffmaterialpartikel, enthaltendes vorexpandiertes Kunststoffpartikelmaterial, bereitgestellt bzw. verwendet werden. Mithin können verfahrensgemäß auch compoundierte vorexpandierte Kunststoffmaterialpartikel mit Treibmittel beladen und expandiert werden, was zu zellulären Kunststoffpartikeln mit besonderen Eigenschaften führt. Insbesondere sind durch eine gezielte Auswahl und Konzentration entsprechender Zusatzstoffe bzw. -materialien für bestimmte Applikationen oder Anwendungsgebiete maßgeschneiderte Kunststoffpartikel herstellbar. Die Zusatzstoffe bzw. -materialien können im Rahmen der Herstellung der vorexpandierten Kunststoffmaterialpartikel in diese eingebracht worden sein.

Insbesondere durch Faserstoffe bzw. -materialien - hierbei kann es sich grundsätzlich um organische oder um anorganische Faserstoffe bzw. -materialien handeln, mithin sind beispielhaft z. B. Aramid, Glas-, Kohle- oder Naturfasern zu nennen - lassen sich, im Hinblick auf die weitere Verarbeitung, besondere Materialeigenschaften der verfahrensgemäß herstellbaren bzw. hergestellten zellulären Kunststoffpartikel respektive eines aus den verfahrensgemäß herstellbaren bzw. hergestellten zellulären Kunststoffpartikeln hergestellten Partikelschaumformteils realisieren. Entsprechende zelluläre Kunststoffpartikel respektive aus diesen hergestellte Partikelschaumformteile können sich einerseits aufgrund ihrer zellularen Struktur durch eine besondere Dichte und andererseits insbesondere durch, verarbeitungsbedingt, entstehende mechanische Verbindungen benachbarter Zellen innerhalb jeweiliger zellulärer Kunststoffpartikel und/oder zwischen jeweiligen benachbarten zellulären Kunststoffpartikeln durch besondere mechanische Eigenschaften auszeichnen. Bei der nachfolgenden Verarbeitung zu Partikelschaumformteilen können diese besonderen mechanischen Eigenschaften lokal oder integral genutzt bzw. noch modifiziert werden. Analoges gilt - grundsätzlich unabhängig von deren chemischer Zusammensetzung für nicht faserartige bzw. -förmige Zusatzstoffe bzw. -materialien, wie z. B. für kugelartige bzw. - förmige oder plättchenartige bzw. -förmige organische und/oder anorganische Zusatzstoffe bzw. -materialien.

Neben einer gezielten Beeinflussung der mechanischen Eigenschaften der Kunststoffpartikel können sich durch entsprechende Zusatzstoffe bzw. - materialien z. B. auch die elektrischen Eigenschaften und/oder die thermischen Eigenschaften der Kunststoffpartikel gezielt beeinflussen lassen. Mithin sind, etwa durch elektrisch und/oder thermisch leitfähige Zusatzstoffe bzw. -materialien, wie z. B. Metall- und/oder Rußpartikel, etc., Kunststoffpartikel mit besonderen elektrisch und/oder thermisch leitfähigen Eigenschaften herstellbar.

Die Konzentration entsprechender Zusatzstoffe bzw. -materialien kann grundsätzlich, wenngleich typischerweise materialabhängig, frei gewählt werden. Mithin wird lediglich beispielhaft angegeben, dass vorexpandierte Kunststoffmaterialpartikel mit einem (oder mehreren) Zusatzstoff(en) bzw. -material(ien) in einer (jeweiligen) Konzentration zwischen 0,01 Gew.-%, dies gilt insbesondere für chemisch aktive Zusätze, und 60 Gew.-%, dies gilt insbesondere für faserige Zusätze, bereitgestellt bzw. verwendet werden können. Wie angedeutet, ist die Konzentration typischerweise abhängig von den konkreten chemischen und/oder physikalischen Eigenschaften der Zusatzstoffe.

Verfahrensgemäß kann grundsätzlich jedwedes Polyolefin-basierte Kunststoffmaterial als Ausgangsmaterial bereitgestellt bzw. verwendet werden. Beispielsweise können verfahrensgemäß Kunststoffmaterialpartikel aus der Gruppe: Polypropylen, Polypropylen-Blend, Polyethylen, Polyethylen-Blend, Polyethylen-Polypropylen-Blends, Co-Polymere aus Ethylen und wenigstens einem anderen olefinischen Monomer, Co-Polymer des Propylen and wenigstens einem anderen olefinischen Monomer und/oder Mischungen der Vorgenannten, bereitgestellt bzw. verwendet werden.

Sofern Polyolefin-basierte Blends verwendet werden, welche wenigstens zwei sich in wenigstens einem chemischen und/oder physikalischen Parameter und/oder die Molekülkonfiguration betreffenden Parameter unterscheidende (po-Iy)olefinischen Bestandteile enthalten, können diese grundsätzlich in jeden beliebigen anteilsmäßigen Zusammensetzungen, wobei sich die jeweiligen Anteile prozentual zu 100 % addieren, vorliegen. Entsprechend kann ein erster Bestandteil einen beliebigen gewichtsmäßigen Anteil zwischen 1 und 99 Gew.-% und ein zweiter Bestandteil einen beliebigen gewichtsmäßigen Anteil zwischen 99 und 1 Gew.-% aufweisen, wobei sich die jeweiligen Anteile zu 100 Gew.-% addieren. Selbstverständlich sind auch Anteile unterhalb 1 Gew.-% und oberhalb 99 Gew.-% denkbar.

Verfahrensgemäß können je nach den gewählten Prozessbedingungen z. B. zelluläre Kunststoffpartikel mit einer gleichmäßig oder ungleichmäßig verteilten zellularen Struktur hergestellt werden. Die Eigenschaften, d. h. insbesondere die Verteilung der zellulären Struktur, innerhalb jeweiliger zellulärer Kunststoffpartikel lässt sich sonach neben materialspezifischen Parametern (auch) durch Druck, Temperatur und Zeit während des Beladens bzw. Expandierens sowie durch die Förderzeiten bzw. -bedingungen zwischen den einzelnen Verfahrensschritten S1 - S3 beeinflussen.

Sofern verfahrensgemäß zelluläre Kunststoffpartikel mit einer ungleichmäßig verteilten zellularen Struktur hergestellt werden, können jeweilige zelluläre Kunststoffpartikel in einem Randbereich eine andere Anzahl und/oder Form und/oder Größe an Zellen als in einem Kernbereich aufweisen. Mithin sind gradierte zelluläre Kunststoffpartikel herstellbar, welche aufgrund der unterschiedlichen Verteilung an Zellanzahl, Zellform und/oder Zellgröße ein besonderes Eigenschaftsspektrum aufweisen. Gradierte zelluläre Kunststoffpartikel können sonach, etwa nach Art von Core-Shell-Partikeln, in einem (äußeren) Randbereich andere zelluläre Eigenschaften aufweisen als in einem (inneren) Kernbereich.

Im Allgemeinen gilt ferner, dass, insbesondere je nach Expansionsgrad und gegebenenfalls Füllstoffanteil, verfahrensgemäß zelluläre Kunststoffpartikel mit einer Schüttdichte in einem Bereich zwischen 5 und 1000 g/l hergestellt werden können. Die tatsächliche Schüttdichte - selbstverständlich ist auch hier typischerweise ein Durchschnitt angesprochen - kann sonach je nach den gewählten Prozessbedingungen über einen sehr weiten Bereich und somit maßgeschneidert eingestellt werden.

Das in Fig. 2 gezeigte Ausführungsbeispiel einer Vorrichtung 1 zur Durchführung des Verfahrens umfasst die erwähnte Bereitstellungseinrichtung 2, die allgemein als erste Einrichtung, welche zum Beladen der vorexpandierten thermoplastischen mit einem Treibmittel unter Einfluss von Druck eingerichtet ist, bezeichenbare Beladungseinrichtung 3 und die allgemein als zweite Einrichtung, welche zum Expandieren des Treibmittels zur Herstellung zellulärer Kunststoffpartikel unter Einfluss von Temperatur eingerichtet ist, bezeichenbare Expansionseinrichtung 4.

Die Bereitstellungseinrichtung 2 kann durch eine geeignete Handlingeinrichtung zum Handling der vorexpandierten Kunststoffmaterialpartikel zu deren Bereitstellung umfassen. In analoger Weise kann die Vorrichtung 1, wenngleich nicht gezeigt, eine der Expansionseinrichtung 4 nachgelagerte Handlingeinrichtung 5 zur Entnahme der hergestellten zellulären Kunststoffpartikel umfassen. Entsprechende Handlingeinrichtungen können, wie erwähnt, als Fördereinrichtungen ausgebildet sein bzw. solche umfassen. Insbesondere kommen zur Förderung von Schüttgut geeignete Fördereinrichtungen, wie z. B. pneumatische Fördereinrichtungen, welche zur Ausbildung einer Förderströmung eingerichtet sind, in Betracht.

Die zweite Einrichtung kann, wie erwähnt, eine Fördereinrichtung, insbesondere eine kombinierte Förder- und Temperiereinrichtung, umfassen. Eine entsprechende kombinierte Förder- und Temperiereinrichtung kann z. B. als Durchlaufofen, insbesondere als ein einen oder mehrere Infrarot-Strahler umfassender Infrarot-Durchlaufofen, ausgebildet sein bzw. wenigstens einen solchen umfassen.

Der zweiten Einrichtung kann ferner eine Entspannungseinrichtung (nicht gezeigt), wie z. B. ein Entspannungsraum, in welchem die hergestellten zellulären Kunststoffpartikel unter definierten chemischen und/oder physikalischen Bedingungen, d. h. insbesondere definierten Temperaturverhältnisses, für eine definierte Zeit ausgelagert werden, zugeordnet sein bzw. werden. Eine entsprechende Entspannungseinrichtung kann z. B. als eine Dekompressionseinrichtung ausgebildet sein oder eine solche umfassen.

In allen Ausführungsbeispielen ist es denkbar, dass die Vorrichtung 1 eine Fördereinrichtung umfasst, vermittels welcher die vorexpandierten Kunststoffmaterialpartikel bzw. im Weiteren die zellulären Kunststoffpartikel kontinuierlich oder diskontinuierlich durch die einzelnen Einrichtungen 2 - 4 gefördert werden.

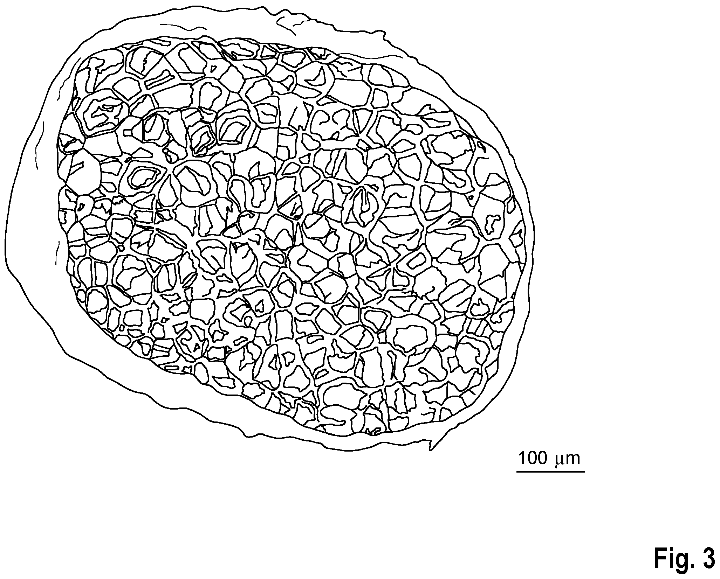

Fig. 3 zeigt eine Prinzipdarstellung eines verfahrensgemäß hergestellten zellulären Kunststoffpartikels gemäß einem Ausführungsbeispiel in einer geschnittenen Ansicht. Konkret handelt es sich hierbei um einen Ausschnitt einer mikroskopischen Aufnahme einer Schaumperle aus vorexpandiertem Polypropylen (EPP) mit einer Ausgangsschüttdichte von ca. 75 g/l verfahrensgemäß hergestellten zellulären Kunststoffpartikels mit einer verringerten Schüttdichte von ca. 17 g/l.

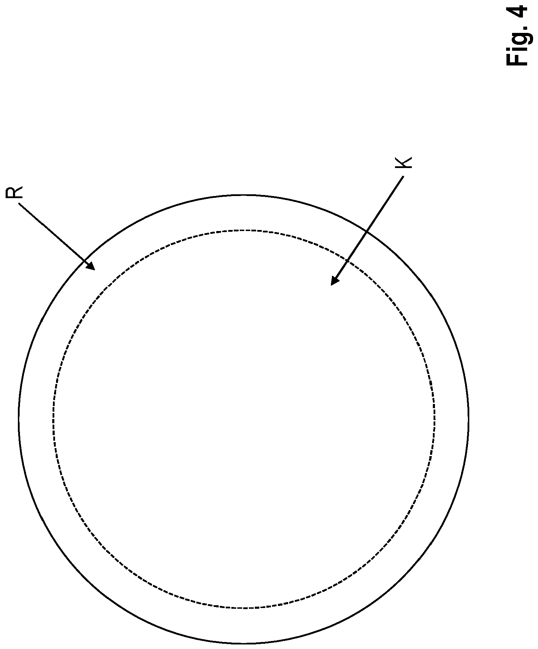

Fig. 4 zeigt eine Prinzipdarstellung eines verfahrensgemäß hergestellten zellulären Kunststoffpartikels gemäß einem Ausführungsbeispiel. Die Prinzipdarstellung zeigt einen zellulären Kunststoffpartikel mit lokal unterschiedlichen Zelleigenschaften und somit einen gradierten zellulären Kunststoffpartikel. Konkret weist der zelluläre Kunststoffpartikel eine ungleichmäßig verteilte zellulare Struktur auf, als der Kunststoffpartikel in einem Randbereich R eine andere, nämlich eine höhere Anzahl an Zellen als in einem Kernbereich K aufweist. Die gestrichelte innere Linie deutet an, dass die Übergänge zwischen dem Randbereich R und dem Kernbereich K stetig sein können. Der Randbereich R kann gegebenenfalls lokal unterschiedlich stark ausgeprägt sein.

## Patentansprüche

1. Verfahren zur Herstellung zellulärer Kunststoffpartikel, **gekennzeichnet durch** die Schritte:
- Bereitstellen eines Kunststoffmaterials in Form von vorexpandierten Polyolefin-basierten Kunststoffmaterialpartikeln,
- Beladen der vorexpandierten Polyolefin-basierten Kunststoffmaterialpartikel mit einem Treibmittel unter Einfluss von Druck,
- Expandieren der mit Treibmittel beladenen vorexpandierten Polyolefin-basierten Kunststoffmaterialpartikel zur Herstellung zellulärer Polyolefin-basierten Kunststoffpartikel, insbesondere zellulärer Polyolefin-basierter Kunststoffpartikel mit geringerer Dichte, unter Einfluss von Temperatur, wobei das Expandieren der mit Treibmittel beladenen Polyolefin-basierten Kunststoffmaterialpartikel unter Einfluss von Temperatur durch Bestrahlen der mit Treibmittel beladenen Polyolefin-basierten Kunststoffmaterialpartikel mit Infrarot-Strahlung erfolgt, wobei
die mit Treibmittel beladenen Polyolefin-basierten Kunststoffmaterialpartikel auf wenigstens einer Förderstrecke entlang wenigstens einer entsprechende Infrarot-Strahlung erzeugenden Strahlungserzeugungseinrichtung gefördert werden.

2. Verfahren nach Anspruch 1, **dadurch gekennzeichnet, dass** das Beladen der vorexpandierten Polyolefin-basierten Kunststoffmaterialpartikel mit einem Treibmittel, insbesondere in Abhängigkeit der chemischen und/oder physikalischen Zusammensetzung der Polyolefin-basierten Kunststoffmaterialpartikel, bei einem Druck in einem Bereich zwischen 1 und 200 bar durchgeführt wird.

3. Verfahren nach Anspruch 1 oder 2, **dadurch gekennzeichnet, dass** das Beladen der vorexpandierten Polyolefin-basierten Kunststoffmaterialpartikel mit einem Treibmittel, insbesondere in Abhängigkeit der chemischen und/oder physikalischen Zusammensetzung der Polyolefin-basierten Kunststoffmaterialpartikel, bei einer Temperatur in einem Bereich zwischen 0 und 250°C durchgeführt wird; und/oder
das Beladen der vorexpandierten Polyolefin-basierten Kunststoffmaterialpartikel mit einem Treibmittel, insbesondere in Abhängigkeit der chemischen Zusammensetzung der Polyolefin-basierten Kunststoffmaterialpartikel, für eine Zeitdauer in einem Bereich zwischen 0,1 und 1000 h durchgeführt wird.

4. Verfahren nach einem der vorhergehenden Ansprüche, **dadurch gekennzeichnet, dass** das Expandieren der mit Treibmittel beladenen Kunststoffmaterialpartikel unter Einfluss von Temperatur, insbesondere in Abhängigkeit der chemischen Zusammensetzung der mit Treibmittel beladenen Polyolefin-basierten Kunststoffmaterialpartikel, bei einer Temperatur in einem Bereich zwischen 20 und 300 °C durchgeführt wird.

5. Verfahren nach einem der vorhergehenden Ansprüche, **dadurch gekennzeichnet, dass** nach dem Expandieren der mit Treibmittel beladenen Polyolefin-basierten Kunststoffmaterialpartikel zur Herstellung der zellulären Polyolefin-basierten Kunststoffpartikel unter Einfluss von Temperatur ein Abkühlen der zellulären Polyolefin-basierten Kunststoffpartikel von einer Prozesstemperatur auf eine unterhalb der Prozesstemperatur liegende Abkühltemperatur durchgeführt wird.

6. Verfahren nach einem der vorhergehenden Ansprüche, **dadurch gekennzeichnet, dass** vorexpandierte Polyolefin-basierte Kunststoffmaterialpartikel bereitgestellt bzw. verwendet werden, welche ein wenigstens einen, insbesondere funktionalen, Zusatzstoff bzw. -material, insbesondere einem Faserstoff bzw. -material und/oder einem Farbstoff bzw. -material und/oder Nukleierungsmittel und/oder Zusätze zur gezielten Beeinflussung des Erweichungsverhaltens, und/oder wenigstens ein Additiv aus der Gruppe: Antioxidans, UV-Stabilisator, Antistatik-Additiv, Fließ- oder AntihaftAdditiv, Flammschutzadditiv, Antiblock-Additiv, Nukleierungsadditiv, Pigment, Farbstoff und Mischungen der Vorgenannten, enthalten, wobei insbesondere vorexpandierte Polyolefin-basierte Kunststoffmaterialpartikel mit wenigstens einem Zusatzstoff bzw. -material in einer Konzentration zwischen 0,01 Gew.-% und 60 Gew.-% bereitgestellt bzw. verwendet werden.

7. Verfahren nach einem der vorhergehenden Ansprüche, **dadurch gekennzeichnet, dass** vorexpandierte Polyolefin-basierte Kunststoffmaterialpartikel aus der Gruppe: Polypropylen, Polypropylen-Blend, Polyethylen, Polyethylen-Blend, Polyethylen-Polypropylen-Blends, Co-Polymere aus Ethylen und wenigstens einem anderen olefinischen Monomer, Co-Polymer aus Propylen und wenigstens einem anderen olefinischen Monomer und/oder Mischungen der Vorgenannten, bereitgestellt bzw. verwendet werden.

8. Verfahren nach einem der vorhergehenden Ansprüche, **dadurch gekennzeichnet, dass** zelluläre Polyolefin-basierte Kunststoffpartikel mit einer gleichmäßig oder ungleichmäßig verteilten zellularen Struktur hergestellt werden, wobei insbesondere zelluläre Polyolefin-basierte Kunststoffpartikel mit einer ungleichmäßig verteilten zellularen Struktur innerhalb jeweiliger zellulärer Polyolefin-basierter Kunststoffpartikel hergestellt werden können, wobei jeweilige zelluläre Kunststoffpartikel in einem Randbereich eine andere Anzahl und/oder Größe und/oder Form an bzw. der Zellen als in einem Kernbereich aufweisen.

9. Verfahren nach einem der vorhergehenden Ansprüche, **dadurch gekennzeichnet, dass** als Treibmittel ein brennbares oder nicht-brennbares organisches Gas, d. h. insbesondere Butan oder Pentan; oder ein Inertgas, wie z. B. Edelgase, d. h. insbesondere Helium, Neon, Argon; oder Stickstoff, Kohlendioxid, oder ein Gemisch, wie z. B. Luft, verwendet wird.

10. Verfahren nach einem der vorhergehenden Ansprüche, **dadurch gekennzeichnet, dass** zelluläre Polyolefin-basierte Kunststoffpartikel mit einer Zellgröße in einem Bereich zwischen 1 und 250 µm, insbesondere einer Zellgröße unterhalb 25 µm, hergestellt werden.

11. Verfahren nach einem der vorhergehenden Ansprüche, **dadurch gekennzeichnet, dass** zelluläre Polyolefin-basierte Kunststoffpartikel mit einer Schüttdichte in einem Bereich zwischen 5 und 1000 g/l hergestellt werden.

12. Vorrichtung (1) zur Herstellung von zellulären Polyolefin-basierten Kunststoffpartikeln gemäß einem Verfahren nach einem der Ansprüche 1 bis 11, umfassend:
- eine erste Einrichtung, welche zum Beladen von vorexpandierten Polyolefin-basierten Kunststoffmaterialpartikeln mit einem Treibmittel unter Einfluss von Druck eingerichtet ist, wobei die Einrichtung insbesondere eine Druckbehältereinrichtung umfasst; und
- eine zweite Einrichtung, welche zum Expandieren des Treibmittels zur Herstellung zellulärer Polyolefin-basierter Kunststoffpartikel unter Einfluss von Temperatur eingerichtet ist, wobei die zweite Einrichtung eine Strahlungserzeugungseinrichtung zur Erzeugung von Infrarot-Strahlung umfasst, wobei die Strahlungserzeugungseinrichtung als Infrarot-Durchlaufofen eingerichtet ist.

## Claims

1. A method for producing cellular plastic particles, comprising:
providing a plastic material in the form of pre-expanded polyolefin-based plastic material particles,
loading the pre-expanded polyolefin-based plastic material particles with a blowing agent under the influence of pressure, and
expanding the pre-expanded polyolefin-based plastic material particles loaded with the blowing agent in order to produce cellular polyolefin-based plastic particles, under the influence of temperature,
wherein the expanding of the polyolefin-based plastic material particles loaded with the blowing agent is carried out under the influence of temperature by irradiation of the polyolefin-based plastic material particles loaded with the blowing agent infrared radiation, wherein the polyolefin-based plastic material particles loaded with the blowing agent are conveyed on at least one conveyor line along at least one corresponding radiation generating device generating respective infrared radiation.

2. The method according to claim 1, wherein the loading of the pre-expanded polyolefin-based plastic material particles with the blowing agent, more particularly, depending on the chemical and/or physical composition of the polyolefin-based plastic material particles, is carried out at a pressure in a range between 1 and 200 bar.

3. The method according to claim 1 or 2, wherein the loading of the pre-expanded polyolefin-based plastic material particles with the blowing agent, more particularly, depending on the chemical and/or physical composition of the polyolefin-based plastic material particles, is carried out at a temperature in a range between 0 and 250° C; and/or
the loading of the pre-expanded polyolefin-based plastic material particles with the blowing agent, more particularly, depending on the chemical composition of the polyolefin-based plastic material particles, is carried out for a period of time in a range between 0.1 and 1000 h.

4. The method according to any one of the preceding claims, wherein the expanding of the plastic material particles loaded with the blowing agent is carried out under the influence of temperature, more particularly, depending on the chemical composition of the polyolefin-based plastic material particles loaded with blowing agent, at a temperature in a range between 20 and 300° C.

5. The method according to any one of the preceding claims, wherein, after expanding the polyolefin-based plastic material particles loaded with the blowing agent, in order to produce the cellular polyolefin-based plastic particles under the influence of temperature, the cellular polyolefin-based plastic particles are cooled from a process temperature to a cooling temperature below the process temperature.

6. The method according to any one of the preceding claims, wherein the pre-expanded polyolefin-based plastic material particles are provided or used, which contain at least one, more particularly, functional, additive or auxiliary material, more particularly, a fiber or fibrous material and/or a dye or color material and/or nucleation agents and/or additives for specifically influencing the softening characteristics, and/or at least one additive from the group: antioxidant, UV stabilizer, antistatic additive, flow or non-stick additive, flame retardant additive, anti-blocking additive, nucleation additive, pigment, dye and mixtures of the aforementioned, wherein, more particularly, pre-expanded polyolefin-based plastic material particles with at least one additive or auxiliary material in a concentration between 0.01% by weight and 60% by weight are provided or used.

7. The method according to any one of the preceding claims, wherein pre-expanded polyolefin-based plastic material particles are provided or used from the group: polypropylene, polypropylene blend, polyethylene, polyethylene blend, polyethylene-polypropylene blends, copolymers of ethylene and at least one other olefinic monomer, copolymer of propylene and at least one other olefinic monomer and/or mixtures of the aforementioned.

8. The method according to any one of the preceding claims, wherein cellular polyolefin-based plastic particles with a uniformly or non-uniformly distributed cellular structure are produced, wherein, more particularly, cellular polyolefin-based plastic particles with a non-uniformly distributed cellular structure can be produced within respective cellular polyolefin-based plastic particles, wherein respective cellular plastic particles have a different number and/or size and/or shape of cells in an edge region than in a core region.

9. The method according to any one of the preceding claims, wherein a combustible or non-combustible organic gas; or an inert gas comprising noble gases; or nitrogen, carbon dioxide, or a mixture comprising, e.g. air, is used as the blowing agent.

10. The method according to any one of the preceding claims, wherein cellular polyolefin-based plastic particles are produced with a cell size in a range between 1 and 250 µm, more particularly, a cell size below 25 µm.

11. The method according to any one of the preceding claims, **characterized in that** cellular polyolefin-based plastic particles are produced with a bulk density in a range between 5 and 1000 g/l.

12. An apparatus (1) for producing cellular polyolefin-based plastic particles according to a method according to any one of claims 1 - 11, comprising:
- a first device which is set up for loading pre-expanded polyolefin-based plastic material particles with a blowing agent under the influence of pressure, the device, more particularly, comprising a pressure container device; and
- a second device which is set up for expanding the blowing agent for producing cellular polyolefin-based plastic particles under the influence of temperature, the second device comprising a radiation generating device for generating infrared radiation, wherein the radiation generating device is configured as an infrared continuous oven.

## Revendications

1. Procédé de production de particules de matière plastique cellulaires, **caractérisé par** les étapes :
- de fourniture d'un matériau en matière plastique sous la forme de particules de matériau en matière plastique à base de polyoléfine pré-expansées,
- de chargement des particules de matériau en matière plastique à base de polyoléfine pré-expansées avec un agent gonflant sous l'action d'une pression,
- d'expansion des particules de matériau en matière plastique à base de polyoléfine pré-expansées chargées en agent gonflant pour produire des particules de matière plastique à base de polyoléfine cellulaires, en particulier des particules de matière plastique à base de polyoléfine cellulaires avec une faible densité, sous l'action d'une température,
dans lequel l'expansion des particules de matériau en matière plastique à base de polyoléfine chargées en agent gonflant est effectuée sous l'action d'une température en irradiant les particules de matériau en matière plastique à base de polyoléfine chargées en agent gonflant avec un rayonnement infrarouge, dans lequel
les particules de matériau en matière plastique à base de polyoléfine chargées en agent gonflant sont convoyées sur au moins un tronçon de convoyage le long d'au moins un dispositif de génération de rayonnement générant un rayonnement infrarouge correspondant.

2. Procédé selon la revendication 1, **caractérisé en ce que** le chargement des particules de matériau en matière plastique à base de polyoléfine pré-expansées avec un agent gonflant est effectué à une pression dans une plage entre 1 et 200 bar, en particulier en fonction de la composition chimique et/ou physique des particules de matériau en matière plastique à base de polyoléfine.

3. Procédé selon la revendication 1 ou 2, **caractérisé en ce que** le chargement des particules de matériau en matière plastique à base de polyoléfine pré-expansées avec un agent gonflant est effectué à une température dans une plage entre 0 et 250 °C, en particulier en fonction de la composition chimique et/ou physique des particules de matériau en matière plastique à base de polyoléfine ; et/ou
le chargement des particules de matériau en matière plastique à base de polyoléfine pré-expansées avec un agent gonflant est effectué pendant une durée dans une plage entre 0,1 et 1000 h, en particulier en fonction de la composition chimique des particules de matériau en matière plastique à base de polyoléfine.

4. Procédé selon l'une quelconque des revendications précédentes, **caractérisé en ce que** l'expansion des particules de matériau en matière plastique chargées en agent gonflant est effectuée à une température dans une plage entre 20 et 300 °C sous l'action d'une température, en particulier en fonction de la composition chimique des particules de matériau en matière plastique à base de polyoléfine chargées en agent gonflant.

5. Procédé selon l'une quelconque des revendications précédentes, **caractérisé en ce qu'**après l'expansion des particules de matériau en matière plastique à base de polyoléfine chargées en agent gonflant pour produire les particules de matière plastique à base de polyoléfine cellulaires, un refroidissement des particules de matière plastique à base de polyoléfine cellulaires depuis une température de processus sur une température de refroidissement inférieure à la température de processus est effectué sous l'action d'une température.

6. Procédé selon l'une quelconque des revendications précédentes, **caractérisé en ce que** des particules de matériau en matière plastique à base de polyoléfine pré-expansées sont fournies ou utilisées, lesquelles contiennent au moins un additif ou matériau supplémentaire, en particulier fonctionnel, en particulier une matière fibreuse ou un matériau fibreux et/ou un colorant ou un matériau colorant et/ou un agent de nucléation et/ou des additifs pour influencer de manière ciblée le comportement de ramollissement, et/ou au moins un additif issu du groupe : antioxydant, stabilisant UV, additif antistatique, additif d'écoulement ou antiadhésif, additif ignifuge, additif antibloquant, additif de nucléation, pigment, colorant et mélanges des éléments mentionnés ci-avant, dans lequel en particulier des particules de matériau en matière plastique à base de polyoléfine pré-expansées sont fournies ou utilisées avec au moins un additif ou un matériau supplémentaire en une concentration comprise entre 0,01 % en poids et 60 % en poids.

7. Procédé selon l'une quelconque des revendications précédentes, **caractérisé en ce que** sont fournies ou utilisées des particules de matériau en matière plastique à base de polyoléfine pré-expansées issues du groupe : polypropylène, mélange de polypropylène, polyéthylène, mélange de polyéthylène, mélanges polyéthylène-polypropylène, copolymères d'éthylène et d'au moins un autre monomère oléfinique, copolymère de propylène et d'au moins un autre monomère oléfinique et/ou des mélanges de ceux-ci.

8. Procédé selon l'une quelconque des revendications précédentes, **caractérisé en ce que** des particules de matière plastique à base de polyoléfine cellulaires sont produites avec une structure cellulaire à répartition régulière ou irrégulière, dans lequel en particulier des particules de matière plastique à base de polyoléfine cellulaires peuvent être produites avec une structure cellulaire à répartition irrégulière à l'intérieur de particules de matière plastique à base de polyoléfine cellulaires respectives, dans lequel des particules de matière plastique cellulaires respectives présentent dans une zone de bord un nombre et/ou une taille et/ou une forme sur des ou les cellules autres que dans une zone centrale.

9. Procédé selon l'une quelconque des revendications précédentes, **caractérisé en ce qu'**un gaz organique combustible ou non combustible, en d'autres termes en particulier du butane ou du pentane ; ou un gaz inerte, comme des gaz nobles, en d'autres termes en particulier de l'hélium, du néon, de l'argon ; ou de l'azote, du dioxyde de carbone, ou un mélange, comme de l'air, est utilisé en tant qu'agent gonflant.

10. Procédé selon l'une quelconque des revendications précédentes, **caractérisé en ce que** des particules de matière plastique à base de polyoléfine cellulaires sont produites avec une taille de cellule dans une plage entre 1 et 250 µm, en particulier une taille de cellule inférieure à 25 µm.

11. Procédé selon l'une quelconque des revendications précédentes, **caractérisé en ce que** des particules de matière plastique à base de polyoléfine cellulaires sont produites avec une masse volumique apparente dans une plage entre 5 et 1000 g/l.

12. Dispositif (1) de fabrication de particules de matière plastique à base de polyoléfine cellulaires selon un procédé selon l'une quelconque des revendications 1 à 11, comprenant :
- un premier dispositif, lequel est mis au point pour charger des particules de matériau en matière plastique à base de polyoléfine pré-expansées avec un agent gonflant sous l'action d'une pression, dans lequel le dispositif comprend en particulier un dispositif à contenant sous pression ; et
- un deuxième dispositif, lequel est mis au point pour expanser l'agent gonflant pour produire des particules de matière plastique à base de polyoléfine cellulaires sous l'action d'une température, dans lequel le deuxième dispositif comprend un dispositif de génération de rayonnement destiné à générer un rayonnement infrarouge, dans lequel le dispositif de génération de rayonnement est mis au point en tant que four continu infrarouge.
